# EUROPEAN PATENT APPLICATION

(11) **EP 4 823 194 A1**
(43) Date of publication of application: **14.10.2026**
(21) Application number: 23960475.4
(22) Date of filing: 05.12.2023
(51) Int. Cl.: H04W 60/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Taor, Simon Edward William
(86) International application number: PCT/CN2023/136570
(87) International publication number: WO 2025/118161

(57) **Abstract**

This disclosure relates to a communication method, a device, a computer-readable storage medium, a computer program product, and a computer program. The method includes the following. A terminal receives a first reply message. The first reply message indicates information related to at least one of multiple 3rd generation partnership project (3GPP) user plane connections supported and/or requested by the terminal for establishment.

## Description

### TECHNICAL FIELD

This disclosure relates to the field of communication, and more specifically to a communication method, a device, a computer-readable storage medium, a computer program product, and a computer program.

### BACKGROUND

In the related art, an important prerequisite for making both a 3rd generation partnership project (3GPP) user plane connection and a non-3GPP user plane connection correspond to one multi-access (MA) protocol data unit (PDU) session is that a user equipment (UE) may establish control plane connections via both 3GPP access and non-3GPP access, and signalling related to establishment of two user plane connections may be respectively exchanged over two control plane connections. However, in the related art, when multiple accesses are all 3GPP accesses, one or more 3GPP user plane connections are unable to be maintained.

### SUMMARY

A communication method, a device, a computer-readable storage medium, a computer program product, and a computer program are provided in embodiments of the disclosure.

A communication method is provided in embodiments of the disclosure. The method includes the following. A terminal receives a first reply message. The first reply message indicates information related to at least one of multiple 3rd generation partnership project (3GPP) user plane connections supported and/or requested by the terminal for establishment.

A communication method is provided in embodiments of the disclosure. The method includes the following. A first core-network device sends a first reply message. The first reply message indicates information related to at least one of multiple 3GPP user plane connections supported and/or requested by a terminal for establishment.

A terminal is provided in embodiments of the disclosure. The terminal includes a first communication unit. The first communication unit is configured to receive a first reply message. The first reply message indicates information related to at least one of multiple 3GPP user plane connections supported and/or requested by the terminal for establishment.

A first core-network device is provided in embodiments of the disclosure. The first core-network device includes a second communication unit. The second communication unit is configured to send a first reply message. The first reply message indicates information related to at least one of multiple 3GPP user plane connections supported and/or requested by a terminal for establishment.

A terminal is provided in embodiments of the disclosure. The terminal includes a transceiver, a processor, and a memory. The memory is configured to store a computer program. The transceiver is configured to communicate with other devices. The processor is configured to invoke and execute the computer program stored in the memory, to cause the terminal to perform the above method.

A first core-network device is provided in embodiments of the disclosure. The first core-network device includes a transceiver, a processor, and a memory. The memory is configured to store a computer program. The transceiver is configured to communicate with other devices. The processor is configured to invoke and execute the computer program stored in the memory, to cause the first core-network device to perform the above method.

A chip is provided in embodiments of the disclosure. The chip is configured to implement the above method

Specifically, the chip includes a processor. The processor is configured to invoke and execute a computer program stored in a memory, to cause a device equipped with the chip to perform the above method.

A computer-readable storage medium is provided in embodiments of the disclosure. The computer-readable storage medium is configured to store a computer program which, when executed by a device, causes the device to perform the above method.

A computer program product is provided in embodiments of the disclosure. The computer program product includes computer program instructions which cause a computer to perform the above method.

A computer program is provided in embodiments of the disclosure. The computer program, when executed by a computer, causes the computer to perform the above method.

By using the solution provided in the embodiments, a terminal may receive information related to at least one of multiple 3GPP user plane connections supported and/or requested by the terminal for establishment. As such, the problem in the related art that at least one of the multiple 3GPP user plane connections supported by the terminal is unable to be maintained when multiple accesses are all 3GPP accesses can be solved.

### BRIEF DESCRIPTION OF THE DRAWINGS

FIG. 1 is a schematic diagram of an application scenario according to embodiments of the disclosure.
FIG. 2 is a schematic architectural diagram of a 5th-generation (5G) network system.
FIG. 3 is a schematic diagram of a scenario for multi-access (MA) protocol data unit (PDU).
FIG. 4 is a schematic flowchart of a communication method according to an embodiment of the disclosure.
FIG. 5 is a schematic flowchart of a communication method according to another embodiment of the disclosure.
FIGs. 6a and 6b are schematic diagrams of two scenarios for dual 3rd generation partnership project (3GPP) access for MA PDU.
FIGs. 7 to 11 are flowcharts of multiple examples of a communication method according to an embodiment of the disclosure.
FIG. 12 is a schematic block diagram of a terminal according to an embodiment of the disclosure.
FIG. 13 is a schematic block diagram of a first core-network device according to an embodiment of the disclosure.
FIG. 14 is a schematic block diagram of a communication device according to embodiments of the disclosure.
FIG. 15 is a schematic block diagram of a chip according to embodiments of the disclosure.
FIG. 16 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of the embodiments of the disclosure may be applied to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) system, or other communication systems.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, or the like. Embodiments of the disclosure can also be applied to these communication systems. In a possible implementation, a communication system in embodiments of the disclosure may be applied to a carrier aggregation (CA) scenario, a dual connectivity (DC) scenario, or a standalone (SA) network deployment scenario. In a possible implementation, the communication system in embodiments of the disclosure may be applied to an unlicensed spectrum, and the unlicensed spectrum may be regarded as a shared spectrum. Alternatively, the communication system in embodiments of the disclosure may be applied to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like. The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device or other processing device connected to a wireless modem, an in-vehicle device, a wearable device, and a terminal device in a next-generation communication system, for example, a terminal device in an NR network, or a terminal device in a future evolved public land mobile network (PLMN), and the like. In embodiments of the disclosure, the terminal device can be deployed on land, which includes indoor or outdoor, handheld, wearable, or in-vehicle. The terminal device can also be deployed on water (such as ships, and the like). The terminal device can also be deployed in the air (such as airplanes, balloons, satellites, and the like). In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like. By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in a global system of mobile communication (GSM) or a code division multiple access (CDMA) system, or may be a node B (NB) in a wideband code division multiple access (WCDMA) system, or may be an evolutional node B (eNB or eNodeB) in LTE, or a relay station or an AP, or an in-vehicle device, a wearable device, a network device (gNB) in an NR network, a network device in a future evolved PLMN, or a network device in an NTN, etc. By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water. In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

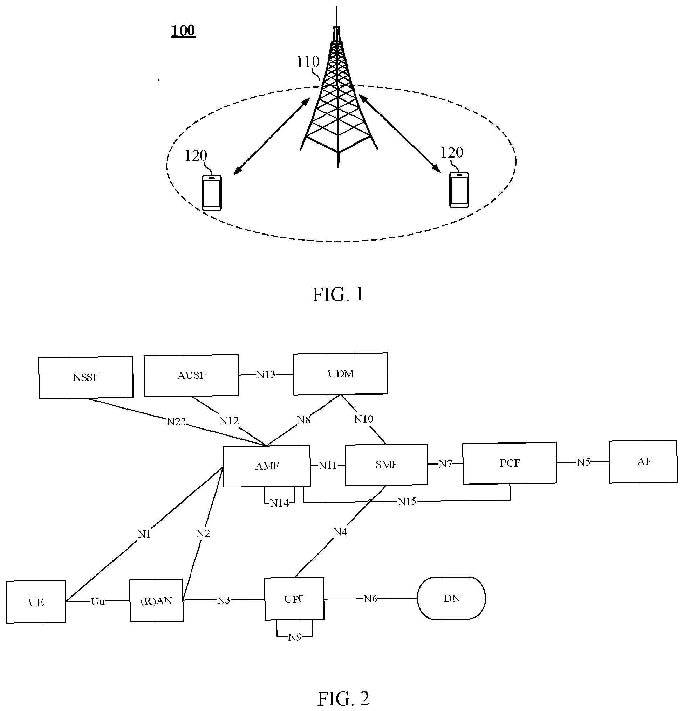

FIG. 1 exemplarily illustrates a communication system 100. The communication system includes one network device 110 and two terminal devices 120. In a possible implementation, the communication system 100 may include multiple network devices 110, and there can be other quantities of terminal devices 120 in a coverage area of each of the network devices 110. Embodiments of the disclosure are not limited in this regard. In a possible implementation, the communication system 100 may further include other network entities such as a mobility management entity (MME) and an access and mobility management function (AMF), and embodiments of the disclosure are not limited in this regard. The network device may further include an access-network device and a core-network device, that is, the wireless communication system may further include multiple core-networks capable of communicating with the access-network device. The access-network device may be an evolutional node B (eNB or e-NodeB for short), a macro base station, a micro base station (also known as "small base station"), a pico base station, an AP, a transmission point (TP), or a new generation node B (gNodeB) in an LTE system, an NR system, or an authorized auxiliary access long-term evolution (LAA-LTE) system. It may be understood that in embodiments of the disclosure, a device with communication functions in a network/system may be referred to as a "communication device". Taking the communication system illustrated in FIG. 1 as an example, the communication device may include the network device and the terminal device(s) that have communication functions. The network device and the terminal device(s) can be the devices in the embodiments of the disclosure, which will not be repeated herein. The communication device may further include other devices such as a network controller, a mobility management entity, or other network entities in the communication system, and embodiments of the disclosure are not limited in this regard.

For better understanding of embodiments of the disclosure, the following will give a brief description of basic procedures and basic concepts involved in the embodiments of the disclosure. It may be understood that, the basic procedures and basic concepts introduced below do not limit the embodiments of the disclosure.

FIG. 2 is an architectural diagram of a 5G network system. The system includes: a network slice selection function (NSSF), which is mainly used for managing network slice-related information, such as selecting network slices for terminal devices; an authentication server function (AUSF), which is used for completing identity authentication for user access; a unified data management (UDM), which is used for managing and storing subscription data and authentication data; an AMF, which is used for completing mobility management, security anchoring, and secure UE policy management, and which is also responsible for forwarding session management-related messages between the UE and a session management function (SMF) in addition to mobility management for UEs; an SMF, which is used for completing session management, UE IP address allocation, and management; a policy control function (PCF), which is responsible for formulating policies related to mobility management, session management, and charging for UEs; an application function (AF), which is used for external application servers; a user plane function (UPF), which is used for complex user plane processing, such as forwarding traffic between a radio access network and the internet, reporting traffic usage, and implementing quality of service (QoS) policies; and a data network (DN), which is an external data network (such as the internet) of the 5G core network (5GC). Data transmission between nodes in the 5GC, between the UE and nodes in the 5GC, between the UE and a (radio) access network ((R)AN), and between the RAN and nodes in the 5GC is performed through corresponding interfaces. For example, as illustrated in FIG. 2, the AMF in the 5GC and the NSSF perform data transmission through an N22 interface; the AMF and the SMF perform data transmission through an N11 interface; the AMF and the AUSF perform data transmission through an N12 interface; and the AMF and the UDM perform data transmission through an N8 interface. The SMF and the UPF perform data transmission through an N4 interface. The UPF and an external data network perform data transmission through an N6 interface, and the UPF and the AN perform data transmission through an N3 interface. The UE establishes an access stratum connection with the (R)AN through a Uu interface to exchange access stratum messages and perform wireless data transmission. The UE establishes a non-access stratum (NAS) connection with the AMF through an N1 interface to exchange NAS messages. The RAN and the AMF perform data transmission through an N2 interface, and the RAN and the UPF perform data transmission through an N3 interface. It may be understood that, the above only describes some interfaces between nodes, and other interfaces between nodes in the 5GC in FIG. 2 are not described in detail herein. In FIG. 2, except for the UE, the (R)AN, and the DN, all other nodes are core-network nodes, and the core-network nodes may be further classified into user plane nodes (i.e., the UPF in FIG. 2) and control plane nodes (core-network nodes other than the UPF).

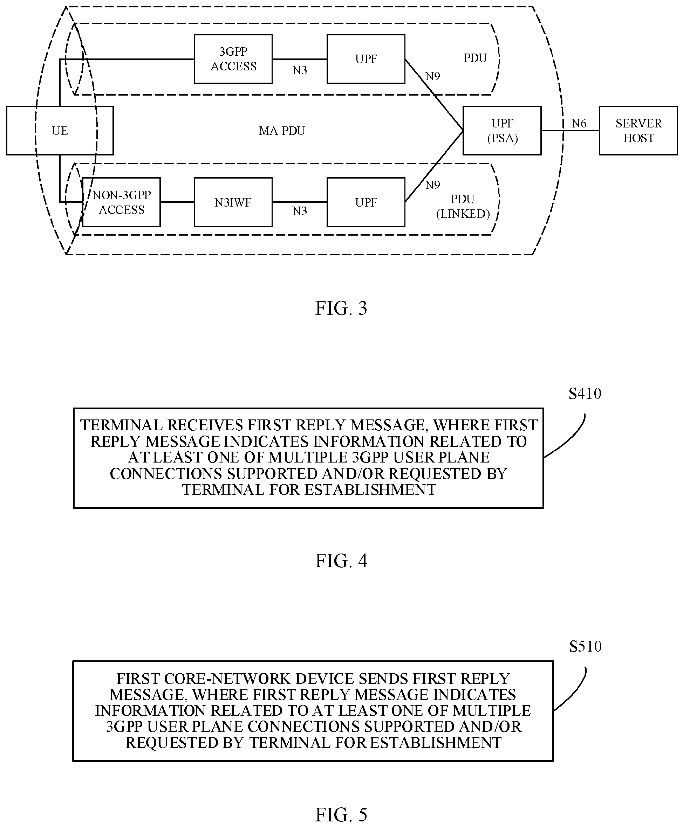

A current 3rd generation partnership project (3GPP) system supports a scenario (or session mode) for multi-access (MA) protocol data unit (PDU) where 3GPP access and non-3GPP access are combined. In a scenario for MA PDU illustrated in FIG. 3, a UE may access a core network via both 3GPP access and non-3GPP access concurrently, and may transmit different data packets via 3GPP access and non-3GPP access. In some practical use cases, there are many types of 3GPP access, including but not limited to, NR access, evolved universal terrestrial radio access (E-UTRA) access, satellite access, etc. The non-3GPP access includes, but is not limited to, Wi-Fi, etc. Specifically, the scenario for MA PDU illustrated in FIG. 3 is as follows. The UE is connected to a UPF through an N3 interface via 3GPP access, the UPF is connected to a UPF (PDU session anchor (PSA)) through an N9 interface, and finally the UPF (PSA) is connected to a server host through an N6 interface, so that the UE can transmit a PDU (or PDU session) via a 3GPP connection. The UE is connected to a non-3GPP inter working function (N3IWF) via non-3GPP access, the N3IWF is connected to a UPF through an N3 interface, the UPF is connected to the UPF (PSA) through an N9 interface, and finally the UPF (PSA) is connected to the server host through the N6 interface, so that the UE can transmit a PDU (linked) via a non-3GPP connection.

Assuming that both 3GPP access and non-3GPP access are allowed for single network slice selection assistance information (S-NSSAI) of a PDU session, an MA PDU connectivity service is realized by establishing an MA PDU session, i.e., a PDU session that may have user plane resources on two access networks. Since a manner of establishing the MA PDU session provided or supported by the current 3GPP system enables both a 3GPP user plane connection and a non-3GPP user plane connection to correspond to one MA PDU session, a data packet of this session may be subject to steering, switching, or splitting according to a policy, which is referred to as an access traffic steering, switching, splitting (ATSSS) mechanism. The ATSSS mechanism supports the MA PDU connectivity service, which can exchange PDUs between the UE and a data network (for example, a server host) by simultaneously using one 3GPP access network and one non-3GPP access network and two independent N3/N9 tunnels between the PSA and RAN.

The UE may request an MA PDU session when the UE is registered via both 3GPP and non-3GPP accesses, or when the UE is registered via one access only. After the establishment of an MA PDU session, and when there are user plane resources on both access networks, the UE applies network-provided policy (i.e., ATSSS rules) and considers local conditions (such as network interface availability, signal loss conditions, user preferences, etc.) for deciding how to distribute the uplink traffic across the two access networks. Similarly, the UPF anchor of the MA PDU session applies network-provided policy (i.e. N4 rules) and feedback information received from the UE via the user plane (such as access network unavailability or availability) for deciding how to distribute the downlink traffic across devices. Of the two N3/N9 tunnels and two access networks, when there are user plane resources on only one access network, the UE applies the ATSSS rules and considers local conditions for triggering the establishment or activation of the user plane resources over another access network.

For a type of an MA PDU session, the unstructured type is not supported. Specifically, the type of an MA PDU session may be one of the following types: IPv4, IPv6, IPv4v6, and Ethernet.

As can be seen, the current manner of establishing the MA PDU session enables both a 3GPP user plane connection and a non-3GPP user plane connection to correspond to one MA PDU session. As such, a data packet of this session may be subject to steering, switching, or splitting according to a policy. However, this solution is based on an important prerequisite, that is, the UE may establish NAS connections via both 3GPP access and non-3GPP access, and signalling related to establishment of two user plane connections may be respectively exchanged over two NAS connections. When both accesses are 3GPP accesses, the current ATSSS functionality cannot be realized. Specifically, there may be the following two problems. Problem 1: for multi-3GPP user plane connections, there may be only one NAS connection (control plane connection) or only one NAS connection may be used under certain conditions, but one or more 3GPP user plane connections need to be established or modified in different 3GPP access technologies and 3GPP base stations/cells. For example, base station 1 is configured to initiate a registration procedure (where there is only one registration procedure, and one NAS connection is established), and subsequently, when 3GPP user plane connections needs to be established in both base station 1 and base station 2, since there is no corresponding NAS connection in base station 2, the current mechanism cannot support such establishment. For another example, in the case where there is only one NAS connection or only one NAS connection is used, the current mechanism also cannot support such processing as maintenance of a 3GPP user plane connection (for example, establishment, modification, or deletion of the 3GPP user plane connection) via the one NAS connection when the 3GPP user plane connection and the one NAS connection correspond to different RATs. For instance, both maintenance of a user plane connection corresponding to a non-terrestrial station (a base station corresponding to satellite access) and maintenance of a user plane connection corresponding to a terrestrial station may be performed by the terrestrial station, because of its short time and high bandwidth. More specifically, assuming that an NAS connection for terrestrial-station access is currently established, then maintaining, via the NAS connection, a 3GPP user plane connection established for the base station corresponding to the satellite access is not supported by the current mechanism. It may be noted that, the modification of the 3GPP user plane connection may refer to addition, update, or deletion of a QoS parameter and/or a QoS flow, and the addition, update, or deletion of the QoS flow may mean that a new filter can be added, updated, or bound (for example, a bound internet protocol (IP) address is added) regardless of whether the QoS parameter changes. Problem 2: the establishment of user plane connections for multiple 3GPP accesses also requires capability reporting as well as network-side support and authorization, but the related negotiation is also not supported currently.

It may be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship. It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B. In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

FIG. 4 is a schematic flowchart of a communication method according to an embodiment of the disclosure. The method includes at least part of the following contents.

At S410, a terminal receives a first reply message, where the first reply message indicates information related to at least one of multiple 3GPP user plane connections supported and/or requested by the terminal for establishment.

FIG. 5 is a schematic flowchart of a communication method according to another embodiment of the disclosure. The method includes at least part of the following contents.

At S510, a first core-network device sends a first reply message, where the first reply message indicates information related to at least one of multiple 3GPP user plane connections supported and/or requested by a terminal for establishment.

Herein, the first core-network device may include a control plane node. Exemplarily, the control plane node may include one or more AMFs. It may be understood that, the above is merely taken as an example for illustration, and in actual processing, the first core-network device is not limited to the control plane nodes listed above, and all possible network elements of the first core-network device will not be enumerated herein.

The terminal may be a 3GPP terminal, i.e., a terminal capable of accessing a 3GPP network for data transmission and reception. Exemplarily, the terminal may be a mobile phone, a watch, a pad, or the like. All possible types of the terminal will not be enumerated and limited in this embodiment.

The first reply message may also be referred to as a first response message.

In some possible implementations, the terminal first interacts with the network side to obtain information related to the multiple 3GPP user plane connections supported and/or requested by the terminal for establishment.

Before the terminal receives the first reply message, the method further includes the following. The terminal sends a first request message. Before the first core-network device sends the first reply message, the method further includes the following. The first core-network device receives a first request message.

In some embodiments, during a registration procedure, the terminal negotiates or obtains the information related to the multiple 3GPP user plane connections supported and/or requested by the terminal for establishment. The first request message is used for establishing a 3GPP control plane connection. In this embodiment, the first request message may be a registration request message, and the first reply message may be a registration reply message (or registration response message).

Herein, the 3GPP control plane connection that the first request message requests to establish may be a 3GPP control plane connection to be first established by the terminal, or may be a 3GPP control plane connection to be established by the terminal after having established one or more 3GPP control plane connections. Hereinafter, the 3GPP control plane connection that the first request message requests to establish is referred to as a first 3GPP control plane connection. It may be understood that, the term "first" herein is not used for limiting the sequence of establishing 3GPP control plane connections or the number (quantity) of 3GPP control plane connections, and is only for the sake of simplicity below.

The terminal may send the first request message as follows. The terminal sends the first request message to the first core-network device via a radio resource control (RRC) connection established with a first access-network device. Accordingly, the first core-network device may receive the first request message as follows. The first core-network device receives the first request message from the terminal via a first access-network device. Herein, the first access-network device may be an access-network device corresponding to the first 3GPP control plane connection. A manner in which the terminal establishes the RRC connection with the first access-network device is not limited in this embodiment. The first core-network device may include one or more AMFs.

The first request message may carry a capability indication of the terminal. The capability indication of the terminal indicates at least one of: the terminal supporting or requesting establishment of the multiple 3GPP user plane connections, or the number of the multiple 3GPP user plane connections supported or requested by the terminal for establishment. Alternatively, the capability indication of the terminal may indicate at least one of: the terminal supporting or requesting establishment of the multiple 3GPP user plane connections, the number of the multiple 3GPP user plane connections supported or requested by the terminal for establishment, or a first parameter supported (to be used) by the terminal for establishing the multiple 3GPP user plane connections.

The first reply message carries at least one of: a first parameter allowed for the terminal to establish the multiple 3GPP user plane connections, or an indication indicating whether the terminal is allowed to establish the multiple 3GPP user plane connections. It may be noted that, the first reply message may also indicate that establishment of the 3GPP control plane connection is successful.

In an embodiment, after the first core-network device receives the first request message and before the first core-network device sends the first reply message, the processing performed by the first core-network device may further include the following. The first core-network device sends the capability indication of the terminal to a second core-network device. The first core-network device receives subscription information of the terminal from the second core-network device. The first core-network device determines, based on the subscription information of the terminal and/or a local policy, at least one of the following information: a first parameter allowed (to be used) for the terminal to establish the multiple 3GPP user plane connections, or an indication indicating whether the terminal is allowed to establish the multiple 3GPP user plane connections. The first core-network device may add at least one of the first parameter allowed (to be used) for the terminal to establish the multiple 3GPP user plane connections or the indication indicating whether the terminal is allowed to establish the multiple 3GPP user plane connections to the first reply message.

The second core-network device may include a user data management (UDM) and/or a user data repository (UDR), etc., which will not be limited or enumerated herein.

The subscription information of the terminal includes at least one of: whether the terminal is allowed to establish the multiple 3GPP user plane connections, the number of multiple 3GPP user plane connections that the terminal is allowed to establish, or frequency information corresponding to each of the multiple 3GPP user plane connections that the terminal is allowed to establish. The frequency information may include a radio frequency selection policy (RFSP). The RFSP may be used for an access-network device to determine frequency information to be used when establishing an air interface connection for the terminal.

The first parameter includes at least one of: one or more radio access technologies (RATs), one or more network types, or one or more system types.

Optionally, the one or more RATs may include at least one of: E-UTRA, NR, satellite, or the like.

Optionally, the one or more network types include at least one of: a terrestrial network (TN) or an NTN.

Optionally, the one or more network types include at least one of: a PLMN or a non-public network (NPN).

Optionally, the one or more system types include at least one of: a 5th-generation system (5GS) or an evolved packet system (EPS).

The first parameter supported by the terminal for establishing the multiple 3GPP user plane connections may refer to at least one of one or more RATs, one or more network types, or one or more system types supported by the terminal for establishing the multiple 3GPP user plane connections. For example, multiple RATs supported by the terminal for establishing the multiple 3GPP user plane connections are NR and satellite, respectively. For another example, multiple network types supported by the terminal for establishing the multiple 3GPP user plane connections are PLMN, NPN, and the like, respectively.

The first parameter allowed for the terminal to establish the multiple 3GPP user plane connections may refer to at least one of one or more RATs, one or more network types, or one or more system types that the core-network side (for example, the first core-network device) allows, supports, or expects the terminal to use for establishing the multiple 3GPP user plane connections. For example, the core-network side (for example, the first core-network device) allows, supports, or expects the terminal to use at least one of E-UTRA, NR, or satellite for establishing the multiple 3GPP user plane connections. For another example, the core-network side (for example, the first core-network device) allows, supports, or expects the terminal to use at least one of TN or NTN for establishing the multiple 3GPP user plane connections. For another example, the core-network side (for example, the first core-network device) allows, supports, or expects the terminal to use at least one of PLMN or NPN for establishing the multiple 3GPP user plane connections. For another example, the core-network side (for example, the first core-network device) allows, supports, or expects the terminal to use at least one of 5GS or EPS for establishing the multiple 3GPP user plane connections.

The first parameter supported by the terminal for establishing the multiple 3GPP user plane connections may be identical to the first parameter allowed by the first core-network device for the terminal to establish the multiple 3GPP user plane connections. Alternatively, the contents included in the first parameter supported by the terminal for establishing the multiple 3GPP user plane connections may be more than the contents included in the first parameter allowed by the first core-network device for the terminal to establish the multiple 3GPP user plane connections. Alternatively, the contents included in the first parameter allowed by the first core-network device for the terminal to establish the multiple 3GPP user plane connections may be more than the contents included in the first parameter supported by the terminal for establishing the multiple 3GPP user plane connections. Alternatively, the first parameter allowed by the first core-network device for the terminal to establish the multiple 3GPP user plane connections may partially overlap the first parameter supported by the terminal for establishing the multiple 3GPP user plane connections.

It may be understood that, the above is merely taken as an example for illustration, and in actual processing, the one or more RATs, the one or more network types, and the one or more system types may also be used in combination. For example, the first parameter allowed for the terminal to establish the multiple 3GPP user plane connections may include PLMN and NPN in TN that the core-network side (for example, the first core-network device) allows, supports, or expects the terminal to use for establishing the multiple 3GPP user plane connections, which will not be limited or enumerated herein.

The indication indicating whether the terminal is allowed to establish the multiple 3GPP user plane connections may specifically indicate at least one of: whether the core-network side (for example, the first core-network device and/or one or more other control plane nodes) allows the terminal to establish the multiple 3GPP user plane connections, or the number of multiple 3GPP user plane connections that the terminal is allowed to establish.

Exemplarily, whether the terminal is allowed to establish the multiple 3GPP user plane connections may be indicated in a manner of a value or in a manner of specific description information. For example, in the case where whether the terminal is allowed to establish the multiple 3GPP user plane connections is indicated in a manner of a value, if the value is a first value, it indicates that the terminal is allowed to establish the multiple 3GPP user plane connections; and if the value is a second value, it indicates that the terminal is not allowed to establish the multiple 3GPP user plane connections. The first value is different from the second value.

Exemplarily, the number of multiple 3GPP user plane connections that the terminal is allowed to establish may be indicated in a manner of directly including the number or in a manner of an indication value. For example, in the case where the number of multiple 3GPP user plane connections that the terminal is allowed to establish is indicated in a manner of directly including the number, the indication indicating whether the terminal is allowed to establish the multiple 3GPP user plane connections may directly include 3, so as to indicate that the number of multiple 3GPP user plane connections that the terminal is allowed to establish is 3. For example, in the case where the number of multiple 3GPP user plane connections that the terminal is allowed to establish is indicated in a manner of an indication value, any one of multiple optional indication values may be used to indicate the number of multiple 3GPP user plane connections that the terminal is allowed to establish. Any optional indication value may correspond to one number, and different optional indication values correspond to different numbers. For example, an optional indication value 001 corresponds to the number 2, an optional indication value 002 corresponds to the number 3, and so on. This is merely taken as a possible example for illustration, and is not intended to limit a first indication.

In an embodiment, in addition to at least one of the first parameter allowed for the terminal to establish the multiple 3GPP user plane connections or the indication indicating whether the terminal is allowed to establish the multiple 3GPP user plane connections, the first reply message may also contain at least one of: an association identifier (ID), a condition under which the terminal is allowed to establish the multiple 3GPP user plane connections, an optional ID range for the multiple 3GPP user plane connections, or a temporary ID. That is, after the first core-network device receives the subscription information of the terminal sent by the second core-network device, the first core-network device may further determine, based on the subscription information of the terminal and/or the local policy, at least one of the following information: the association ID, the condition under which the terminal is allowed to establish the multiple 3GPP user plane connections, the optional ID range for the multiple 3GPP user plane connections, or the temporary ID. In addition to adding at least one of the first parameter allowed for the terminal to establish the multiple 3GPP user plane connections or the indication indicating whether the terminal is allowed to establish the multiple 3GPP user plane connections to the first reply message, the first core-network device may also add at least one of the association ID, the condition under which the terminal is allowed to establish the multiple 3GPP user plane connections, the optional ID range for the multiple 3GPP user plane connections, or the temporary ID to the first reply message.

In the case where the first reply message carries the association ID, the association ID may be used when the terminal subsequently initiates establishment of one or more 3GPP user plane connections, to indicate, via the association ID, that the one or more 3GPP user plane connections belong to the same PDU session. For example, when the terminal subsequently initiates a request related to establishment of one or more 3GPP user plane connections, the terminal carries the association ID in the request to indicate that the one or more 3GPP user plane connections the terminal initiates to establish belong to the same PDU session. Exemplarily, the association ID may be the same as a PDU session ID.

The condition under which the terminal is allowed to establish the multiple 3GPP user plane connections includes at least one of: a location where the terminal is allowed to establish the multiple 3GPP user plane connections or a time when the terminal is allowed to establish the multiple 3GPP user plane connections.

The location may include at least one of: one or more cells, one or more tracking areas (TAs), or one or more areas. The location where the terminal is allowed to establish the multiple 3GPP user plane connections may include at least one of: one or more cells where the terminal is allowed to establish the multiple 3GPP user plane connections, one or more TAs where the terminal is allowed to establish the multiple 3GPP user plane connections, or one or more areas where the terminal is allowed to establish the multiple 3GPP user plane connections.

The one or more cells may be indicated by using an ID of each of the one or more cells. Exemplarily, an ID of any cell may be a physical cell identifier (PCI).

The one or more TAs may be specifically represented by an ID related to each of the one or more TAs. An ID related to any TA may include at least one of: a tracking area code (TAC) or a TA identity (TAI).

The one or more areas may be specifically represented by coordinates of each of the one or more areas. Exemplarily, coordinates of any area may be coordinates of a center point of the area and/or coordinates of one or more boundary locations of the area, etc. Any coordinate may be represented by global positioning system (GPS) coordinate.

The time may include at least one of: one or more absolute time points (or one or more absolute moments), one or more absolute time periods, an establishment duration (or a duration). A time unit of the absolute time point (or moment) may be a minute, or may be a smaller time unit such as a second, a millisecond, a microsecond, a slot, or the like, which will not be limited or enumerated in this embodiment.

In the case where the first reply message carries the optional ID range for the multiple 3GPP user plane connections, the optional ID range for the multiple 3GPP user plane connections may be used by the terminal for determining an ID of each 3GPP user plane connection when initiating establishment of one or more 3GPP user plane connections. It may be noted that, an ID of any 3GPP user plane connection and a PDU session ID are not the same parameter. The multiple 3GPP user plane connections may correspond to different PDU sessions and use different PDU session IDs, respectively. Alternatively, the multiple 3GPP user plane connections may correspond to the same PDU session, which means that the multiple 3GPP user plane connections may be anchored in the same user plane network element or node (such as UPF) and may share the same PDU session ID.

Optionally, the optional ID range may include multiple optional IDs. In this case, in the case where the terminal subsequently initiates establishment of one or more 3GPP user plane connections, the terminal determines an ID of each 3GPP user plane connection as any one of the multiple optional IDs, and IDs of different 3GPP user plane connections are different.

Optionally, the optional ID range may include a minimum ID and a maximum ID. In this case, in the case where the terminal subsequently initiates establishment of one or more 3GPP user plane connections, the terminal determines an ID of each 3GPP user plane connection as any value from the minimum ID to the maximum ID (which may include the maximum ID and the minimum ID) of the optional ID range, and IDs of different 3GPP user plane connections are different.

The temporary ID may be a globally unique temporary UE identity (GUTI).

It may be understood that, the above is merely taken as an example for illustration of the contents that may be carried in the first reply message, and in actual processing, the first reply message may also carry other possible contents. For example, the first reply message may also carry an ID of the first 3GPP control plane connection, etc. For another example, if the first reply message is a registration reply message, the first reply message may also carry at least part of contents or parameters that need to be carried in the registration reply message as specified in a related protocol, which will not be enumerated or limited herein.

After the terminal receives the first reply message sent by the first core-network device, the method may include the following. The terminal sends a second request message, where the second request message is used for establishing one or more 3GPP user plane connections. Accordingly, after the first core-network device sends the first reply message, the method may further include the following. The first core-network device receives a second request message.

The second request message may be a PDU session establishment request or a PDU session modification request.

The second request message may carry at least one of: a first parameter requested and/or required for each 3GPP user plane connection among the one or more 3GPP user plane connections, an access-related parameter, or a capability indication of the terminal.

The access-related parameter includes at least one of: an ID of each access-network device among one or more access-network devices, an ID of each cell among one or more cells corresponding to the access-network device, a signal measurement result of the access-network device, a signal measurement result of the cell, or IDs related to one or more TAs.

The signal measurement result may include at least one of: signal quality, reference signal receiving power (RSRP), or reference signal received quality (RSRQ).

The one or more access-network devices may be determined by the terminal according to a signal measurement result(s). For example, the terminal may currently measure signals of multiple neighbouring access-network devices, and may select one or more access-network devices with the best quality from signal measurement results of the multiple neighbouring access-network devices. It may be understood that, this is merely taken as an example for illustration, and a specific manner in which the terminal determines the one or more access-network devices will not be limited and enumerated in this embodiment.

The one or more cells corresponding to the access-network device may also be determined by the terminal based on a signal measurement result(s). For example, the terminal may currently measure signals of multiple cells corresponding to multiple neighbouring access-network devices, and may select a respective cell(s) corresponding to each of one or more access-network devices with the best quality from a signal measurement result(s) of a respective cell(s) corresponding to each neighbouring access-network device. It may be understood that, this is merely taken as an example for illustration, and a specific manner in which the terminal determines a cell(s) corresponding to each access-network device among the one or more access-network devices will not be limited and enumerated in this embodiment.

An ID related to each of the one or more TAs may include at least one of: a TAI or a TAC. Any TA may include one or more cells.

The related illustration of the capability indication of the terminal is the same as that in the above embodiment and will not be repeated. It may be noted that, the capability indication of the terminal may be carried in the first request message or the second request message, or the capability indication of the terminal may be carried in both the first request message and the second request message.

For the first parameter requested and/or required (to be used) for each 3GPP user plane connection among the one or more 3GPP user plane connections, first parameters for different 3GPP user plane connections may be the same or different. The contents that may be included in the first parameter are the same as those in the above embodiment and will not be repeated. The first parameter requested and/or required (to be used) for each 3GPP user plane connection among the one or more 3GPP user plane connections may refer to an access preference parameter for the terminal to establish each user plane connection among the one or more 3GPP user plane connections, a preferred access parameter for the terminal to establish each user plane connection among the one or more 3GPP user plane connections, or an access parameter required or preferred by the terminal for establishing each user plane connection among the one or more 3GPP user plane connections. That is, when the terminal initiates, at any time, a request message for establishing the one or more 3GPP user plane connections, the terminal may carry, in the message, an access-related parameter expected by the terminal for establishing each 3GPP user plane connection.

In some possible examples, the first reply message may carry the first parameter allowed for the terminal to establish the multiple 3GPP user plane connections, and the second request message may carry the first parameter requested and/or required for each 3GPP user plane connection among the one or more 3GPP user plane connections. In such examples, the first parameter allowed for the terminal to establish the multiple 3GPP user plane connections carried in the first reply message may include the first parameter requested and/or required for each 3GPP user plane connection among the one or more 3GPP user plane connections that may be carried in the second request message.

That is, the function of the first parameter allowed for the terminal to establish the multiple 3GPP user plane connections carried in the first reply message may be to enable the terminal to determine an optional range for the first parameter. As such, when the terminal initiates, at any time, a request for establishing the one or more 3GPP user plane connections, the terminal can determine, from the first parameter allowed for the terminal to establish the multiple 3GPP user plane connections, the first parameter requested and/or required for each 3GPP user plane connection. Herein, the first parameter requested and/or required for each 3GPP user plane connection may be determined from the first parameter allowed for the terminal to establish the multiple 3GPP user plane connections as follows. According to a capability of the terminal (for example, the first parameter supported by the terminal for establishing the multiple 3GPP user plane connections), the terminal may determine, from the first parameter allowed for the terminal to establish the multiple 3GPP user plane connections, the first parameter requested and/or required for each 3GPP user plane connection.

For example, the first parameter allowed for the terminal to establish the multiple 3GPP user plane connections carried in the first reply message includes at least one of E-UTRA, NR, or satellite that the core-network side (for example, the first core-network device) allows, supports, or expects the terminal to use for establishing the multiple 3GPP user plane connections. In the case where the terminal requests, via the second request message, to establish two 3GPP user plane connections, the first parameter requested and/or required for each 3GPP user plane connection among the one or more 3GPP user plane connections carried in the second request message may include: NR requested and/or required by the terminal for establishing 3GPP user plane connection 1 and E-UTRA requested and/or required by the terminal for establishing 3GPP user plane connection 2.

In some examples, the first reply message may not carry the first parameter allowed for the terminal to establish the multiple 3GPP user plane connections, and the second request message may carry the first parameter requested and/or required for each 3GPP user plane connection among the one or more 3GPP user plane connections. In such examples, according to a capability of the terminal (for example, the first parameter supported by the terminal for establishing the multiple 3GPP user plane connections), the terminal may determine the first parameter requested and/or required for each 3GPP user plane connection.

In some examples, the first reply message may carry the first parameter allowed for the terminal to establish the multiple 3GPP user plane connections, and the second request message does not carry the first parameter requested and/or required for each 3GPP user plane connection among the one or more 3GPP user plane connections. In such examples, the first parameter for each 3GPP user plane connection may be determined by the first core-network device according to the first parameter allowed by the first core-network device for the terminal to establish the multiple 3GPP user plane connections (and/or according to the first parameter supported by the terminal for establishing the multiple 3GPP user plane connections in the capability indication of the terminal).

In addition to at least one of the first parameter requested and/or required for each 3GPP user plane connection among the one or more 3GPP user plane connections, the access-related parameter, or the capability indication of the terminal, the second request message may further carry at least one of: an ID of each 3GPP user plane connection among the one or more 3GPP user plane connections, an optional ID range for the multiple 3GPP user plane connections, an association ID, or a multi-3GPP RAT indication.

The multi-3GPP RAT indication indicates that one or more 3GPP user plane connections initiated (or requested) by the terminal this time for establishment belong to the multiple 3GPP user plane connections supported or requested by the terminal for establishment.

The ID of each 3GPP user plane connection among the one or more 3GPP user plane connections may be determined by the terminal itself. For example, in the case where the first reply message carries the optional ID range for the multiple 3GPP user plane connections, the terminal may determine the ID of each 3GPP user plane connection according to the optional ID range for the multiple 3GPP user plane connections. For another example, in the case where the first reply message does not carry the optional ID range for the multiple 3GPP user plane connections, the terminal itself may generate the optional ID range for the multiple 3GPP user plane connections, and determine the ID of each 3GPP user plane connection according to the optional ID range for the multiple 3GPP user plane connections.

The related illustration of the optional ID range for the multiple 3GPP user plane connections is similar to that in the above embodiment, and the only difference lies in that the optional ID range for the multiple 3GPP user plane connections may be sent by the terminal to the first core-network device via the second request message. In an example, the second request message may not carry the ID of each 3GPP user plane connection among the one or more 3GPP user plane connections and may carry only the optional ID range for the multiple 3GPP user plane connections. In this case, the first core-network device allocates, according to the optional ID range for the multiple 3GPP user plane connections sent by the terminal, an ID for each 3GPP user plane connection initiated or requested by the terminal this time for establishment. In this example, the optional ID range for the multiple 3GPP user plane connections may be generated by the terminal or may be carried in the first reply message. In an example, the second request message may carry the ID of each 3GPP user plane connection among the one or more 3GPP user plane connections and may not carry the optional ID range for the multiple 3GPP user plane connections. In an example, the second request message may carry the ID of each 3GPP user plane connection among the one or more 3GPP user plane connections and carry the optional ID range for the multiple 3GPP user plane connections.

After the first core-network device receives the second request message, the method further includes the following. The first core-network device sends an air interface connection establishment message to an access-network device corresponding to the 3GPP user plane connection. The air interface connection establishment message is used for establishing the 3GPP user plane connection on an air interface between the access-network device corresponding to the 3GPP user plane connection and the terminal. The access-network device corresponding to the 3GPP user plane connection is determined based on at least one of a first parameter requested and/or required for the 3GPP user plane connection or an access-related parameter. Different 3GPP user plane connections correspond to different access-network devices.

In an embodiment, sending the second request message by the terminal may refer to: sending multiple second request messages by the terminal to the first core-network device, where each second request message is used for establishing one 3GPP user plane connection, and different second request messages are used for requesting establishment of different 3GPP user plane connections. Accordingly, receiving the second request message by the first core-network device may refer to: receiving multiple second request messages by the first core-network device from the terminal.

Each of the multiple second request messages may be a session establishment request or a session modification request.

Optionally, the terminal may send the multiple second request messages to the first core-network device as follows. When a first condition is satisfied, the terminal sends the multiple second request messages to the first core-network device. That is, after the first condition is satisfied, the terminal may send the multiple second request messages.

Optionally, the terminal may send the multiple second request messages to the first core-network device as follows. When a first condition is satisfied, the terminal sends the *i*-th second request message to the first core-network device, where *i* is an integer greater than or equal to 1. That is, before each time the terminal sends a second request message for establishing one 3GPP user plane connection, the terminal determines whether the first condition is satisfied.

The first condition includes at least one of: a condition under which the terminal is allowed to establish the multiple 3GPP user plane connections, or a determination, based on the indication indicating whether the terminal is allowed to establish the multiple 3GPP user plane connections, that the terminal is allowed to establish the multiple 3GPP user plane connections.

Optionally, the first condition may include only the determination, based on the indication indicating whether the terminal is allowed to establish the multiple 3GPP user plane connections, that the terminal is allowed to establish the multiple 3GPP user plane connections. That is, in the case where the terminal determines, based on the indication indicating whether the terminal is allowed to establish the multiple 3GPP user plane connections, that the terminal is allowed to establish the multiple 3GPP user plane connections, the terminal may determine that the first condition is satisfied.

Optionally, the first condition may include only the condition under which the terminal is allowed to establish the multiple 3GPP user plane connections. That is, in the case where the condition under which the terminal is allowed to establish the multiple 3GPP user plane connections is satisfied, the terminal may determine that the first condition is satisfied.

For example, the condition under which the terminal is allowed to establish the multiple 3GPP user plane connections includes: one or more areas where the terminal is allowed to establish the multiple 3GPP user plane connections and one or more absolute time periods during which the terminal is allowed to establish the multiple 3GPP user plane connections. When a current location of the terminal is within any one of the one or more areas where the terminal is allowed to establish the multiple 3GPP user plane connections and a current moment of the terminal is within any one of the one or more absolute time periods during which the terminal is allowed to establish the multiple 3GPP user plane connections, it is determined that the condition under which the terminal is allowed to establish the multiple 3GPP user plane connections is satisfied. It may be understood that, the above is merely taken as an example for illustration, and each combination and a corresponding determination manner thereof will not be limited or enumerated herein.

Optionally, the first condition includes the condition under which the terminal is allowed to establish the multiple 3GPP user plane connections and the determination, based on the indication indicating whether the terminal is allowed to establish the multiple 3GPP user plane connections, that the terminal is allowed to establish the multiple 3GPP user plane connections. The determination performed by the terminal is the same as that described above in detail and thus will not be repeated.

In some possible embodiments, the first 3GPP control plane connection that the first request message requests to establish is the only 3GPP control plane connection to be established by the terminal. Sending the second request message by the terminal may refer to: sending the multiple second request messages by the terminal to the first core-network device via a first access-network device corresponding to the first 3GPP control plane connection.

Accordingly, receiving the second request message by the first core-network device may refer to: receiving the multiple second request messages by the first core-network device from the terminal via a first access-network device corresponding to the first 3GPP control plane connection.

For example, when any second request message is the *i*-th second request message, the *i*-th second request message may carry at least one of: a capability indication of the terminal, a first parameter requested and/or required for the *i*-th 3GPP user plane connection, or an access-related parameter. Further, the *i*-th second request message may also carry at least one of: an ID of the *i*-th 3GPP user plane connection, an optional ID range for the multiple 3GPP user plane connections, an association ID, or a multi-3GPP RAT indication.

The processing by the first core-network device after receiving the *i*-th second request message may include the following. The first core-network device selects a third core-network device and sends the *i*-th PDU session establishment/modification request to the third core-network device, where a parameter carried in the *i*-th PDU session establishment/modification request at least includes a parameter carried in the *i*-th second request message. The first core-network device receives the *i*-th PDU session establishment/modification reply message sent by the third core-network device.

The processing by the third core-network device may further include the following. The third core-network device receives the *i*-th PDU session establishment/modification request sent by the first core-network device, and the third core-network device establishes or updates a general packet radio service (GPRS) tunnelling protocol (GTP) tunnel configuration with a fourth core-network device. The third core-network device sends the *i*-th PDU session establishment/modification reply message to the first core-network device.

The third core-network device may include one or more SMFs, and the fourth core-network device may include a UPF. The third core-network device may establish or update the GTP tunnel configuration with the fourth core-network device as follows. An SMF selects a UPF based on the parameter carried in the *i*-th PDU session establishment/modification request. The SMF sends a subscription obtaining/update message to a UDM and receives subscription information returned by the UDM, where the subscription obtaining/update message may carry the parameter contained in the *i*-th PDU session establishment/modification request. Further, the SMF interacts with a PCF to obtain a policy control and charging (PCC) policy. Then, the SMF establishes or updates the GTP tunnel configuration with the UPF.

Optionally, the *i*-th PDU session establishment/modification reply message sent by the third core-network device to the first core-network device carries information related to the *i-*th access-network device. The information related to the *i*-th access-network device may include an ID of the *i*-th access-network device.

For example, when the third core-network device is an SMF, the third core-network device may determine the *i*-th access-network device as follows. The SMF determines the *i*-th access-network device according to at least one of a first parameter requested and/or required for the *i*-th 3GPP user plane connection or an access-related parameter carried in the *i*-th session establishment/modification request.

For example, the SMF may determine the *i*-th access-network device according to the first parameter requested and/or required for the *i*-th 3GPP user plane connection carried in the *i-*th session establishment/modification request as follows. The SMF may select, from multiple access-network devices, any access-network device that satisfies a requirement of the first parameter requested and/or required for the *i*-th 3GPP user plane connection, as the *i*-th access-network device. For another example, the SMF may determine the *i*-th access-network device according to the access-related parameter carried in the *i*-th session establishment/modification request as follows. The SMF may select, from multiple access-network devices and/or multiple cells included in the access-related parameter, one of the multiple access-network devices as the *i*-th access-network device. The selection may refer to selecting an access-network device with the best signal quality as the *i*-th access-network device. For another example, the SMF may determine the *i*-th access-network device according to the first parameter requested and/or required for the *i*-th 3GPP user plane connection and the access-related parameter carried in the *i*-th session establishment/modification request as follows. The SMF may select, from multiple access-network devices and/or multiple cells included in the access-related parameter, an access-network device that satisfies a requirement of the first parameter requested and/or required by the terminal for the *i*-th 3GPP user plane connection, as the *i*-th access-network device.

Optionally, the *i*-th PDU session establishment/modification reply message sent by the third core-network device to the first core-network device does not carry information related to the *i*-th access-network device. The processing by the first core-network device after receiving the *i*-th PDU session establishment/modification reply message sent by the third core-network device may include the following. The first core-network device determines the *i*-th access-network device based on at least one of the first parameter requested and/or required for the *i*-th 3GPP user plane connection or the access-related parameter. A specific processing manner of determining the *i*-th access-network device by the first core-network device is similar to a manner of determining the *i*-th access-network device by the third core-network device, and thus will not be repeated.

The first core-network device may send the air interface connection establishment message to the access-network device corresponding to the 3GPP user plane connection as follows. The first core-network device sends the air interface connection establishment message to the *i*-th access-network device corresponding to the *i*-th 3GPP user plane connection. The air interface connection establishment message may also be referred to as an N2 message for air interface connection establishment. That is, the first core-network device sends the N2 message for air interface connection establishment to the *i*-th access-network device, so that the *i*-th access-network device establishes the *i*-th 3GPP user plane connection (or data radio bearer (DRB)) on an air interface with a UE.

It may be noted that, the *i*-th access-network device may be the same as or different from the first access-network device corresponding to the first 3GPP control plane connection, and different 3GPP user plane connections correspond to different access-network devices. The processing that may be further performed by the first core-network device includes: sending the *i*-th second reply message to the first access-network device, where the *i*-th second reply message may carry an ID of the *i*-th 3GPP user plane connection. For example, after completing establishment of the *i*-th 3GPP user plane connection, the terminal may further send to the third core-network device a notification that establishment of the *i*-th 3GPP user plane connection is completed. Accordingly, the third core-network device sends to the first core-network device information indicating that establishment of the *i*-th 3GPP user plane connection is successful, and then the first core-network device may send the *i*-th second reply message to the first access-network device, where the *i*-th second reply message indicates that establishment of the *i*-th 3GPP user plane connection is successful and may carry an ID of the *i*-th 3GPP user plane connection.

In some possible examples, assuming that *i* is 1, i.e., the 1st second request message (i.e., the first one of second request messages) sent by the terminal may be used for establishing the 1st 3GPP user plane connection, and the 1st 3GPP user plane connection may be established by default via the first access-network device, then the 1st second request message may carry at least one of an ID of a first 3GPP user plane connection, an optional ID range for the multiple 3GPP user plane connections, or a capability indication of the terminal.

Optionally, the 1st second request message may carry the optional ID range for the multiple 3GPP user plane connections. In this case, the subsequent processing performed by the first core-network device to establish the 1st 3GPP user plane connection is similar to that in the related art. The only difference lies in that the first core-network device may allocate an ID of the 1st 3GPP user plane connection based on the optional ID range for the multiple 3GPP user plane connections, and send the 1st second reply message to the terminal, where the 1st second reply message may carry the ID of the 1st 3GPP user plane connection.

Optionally, the 1st second request message may carry the ID of the first 3GPP user plane connection, the optional ID range for the multiple 3GPP user plane connections, and the capability indication of the terminal. In this case, the subsequent processing performed by the first core-network device to establish the 1st 3GPP user plane connection is similar to that in the related art. The only difference lies in that the first core-network device may store the optional ID range for the multiple 3GPP user plane connections to allocate an ID of a subsequent 3GPP user plane connection, and send the 1st second reply message to the terminal, where the 1st second reply message may also carry an ID of the 1st 3GPP user plane connection again, to indicate that the ID of the 1st 3GPP user plane connection is received or determined by the network side and/or indicate that establishment of the 1st 3GPP user plane connection is completed.

Optionally, the 1st second request message may carry only at least part of contents that need to be carried in a session establishment/modification request as specified in the related art. The 1st 3GPP user plane connection may be established in the same manner as in the related art. In this case, the subsequent related processing by the first core-network device is the same as that in the related art and will not be described in detail.

It may be understood that, the above is merely taken as an example for illustration of the contents that may be carried in the 1st second request message, and in actual processing, the 1st second request message may contain, but is not limited to, the above contents, which will not be enumerated herein. In addition, in this example, except for the 1st second request message which is different from that in the above example, a non-1st second request message sent by the terminal and the subsequent related processing thereof are all the same as those in the above example and thus will not be repeated.

In a possible embodiment, the first 3GPP control plane connection that the first request message requests to establish is any one of multiple 3GPP control plane connections to be established by the terminal. Each of the multiple second request messages sent by the terminal may be sent via an access-network device corresponding to one of the multiple 3GPP control plane connections. For example, the *i*-th second request message may be sent via an access-network device corresponding to the *i*-th 3GPP control plane connection.

The processing performed by the first core-network device may be similar to that in the above example. The difference lies in that the first core-network device (or the third core-network device) may no longer select an access-network device corresponding to the *i*-th 3GPP user plane connection, and may directly determine an access-network device corresponding to the *i*-th 3GPP control plane connection as the access-network device corresponding to the *i*-th 3GPP user plane connection. The difference may also lie in that the first core-network device may send the *i*-th second reply message to the access-network device corresponding to the *i*-th 3GPP control plane connection. Other processing will not be repeated.

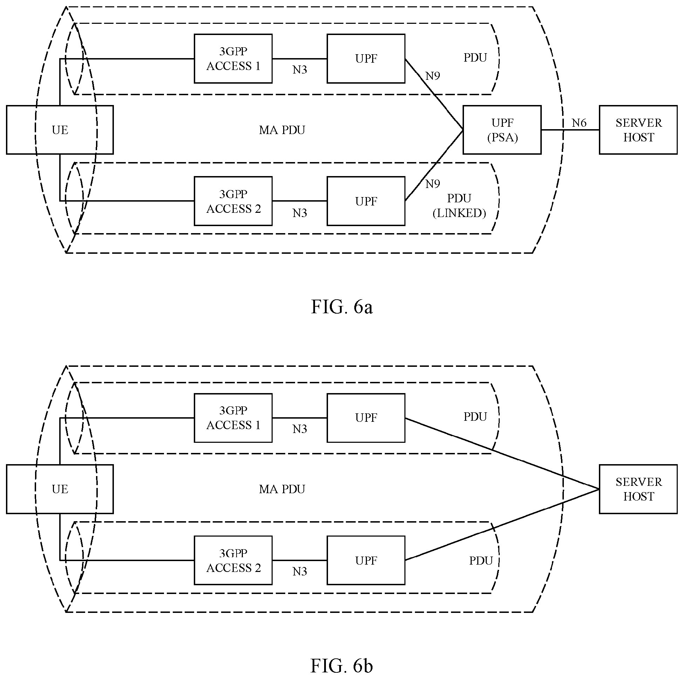

With reference to FIGs. 6a and 6b, an exemplary illustration of a scenario where a UE establishes multiple 3GPP user plane connections will be given. The difference between FIG. 6a and FIG. 6b lies in that in FIG. 6a, two 3GPP user plane connections are anchored in the same UPF, while in FIG. 6b, two 3GPP user plane connections do not need to be anchored in the same UPF. Specifically, in a scenario for MA PDU illustrated in FIG. 6a, a UE is connected to 3GPP access 1, 3GPP access 1 is connected to a UPF through an N3 interface, the UPF is connected to a UPF (PSA) through an N9 interface, and finally the UPF (PSA) is connected to a server host through an N6 interface, so that the UE can transmit a PDU (or PDU session) via a 3GPP user plane connection. In addition, the UE is connected to 3GPP access 2, 3GPP access 2 is connected to a UPF through an N3 interface, the UPF is connected to the UPF (PSA) through an N9 interface, and finally the UPF (PSA) is connected to the server host through the N6 interface, so that the UE can transmit a PDU (linked) via the second 3GPP user plane connection. In a scenario for MA PDU illustrated in FIG. 6b, a UE is connected to 3GPP access 1, 3GPP access 1 is connected to a UPF through an N3 interface, and the UPF is connected to a server host, i.e., the UE establishes a 3GPP user plane connection. In addition, the UE may be connected to 3GPP access 2, 3GPP access 2 is connected to a UPF through an N3 interface, and the UPF is connected to the server host, so that the UE can transmit a PDU via the second 3GPP user plane connection. The solution provided in embodiments of the disclosure is applicable to any scenario provided in FIG. 6a or FIG. 6b. In other words, whether the multiple 3GPP user plane connections are anchored in the same UPF is not limited in the solution provided in the embodiments.

The following will give an exemplary illustration of the above embodiment: a UE (terminal) uses only one control plane connection (i.e., one NAS connection) of 3GPP connection for a registration procedure and a subsequent PDU session establishment/modification procedure, but the UE may establish multiple 3GPP user plane connections, where each 3GPP user plane connection includes an air interface radio bearer connection and/or a core-network GTP tunnel, each 3GPP user plane connection is established using a 3GPP access technology (for example, NR access, E-UTRA access, or satellite access), and the multiple 3GPP user plane connections may be established by the UE by initiating multiple PDU session establishment/modification procedures (i.e., one 3GPP user plane connection is established each time). The multiple 3GPP user plane connections may correspond to the same PDU session and share the same PDU session ID, and in this case, a core network element or node may aggregate or disaggregate data of different 3GPP user plane connections corresponding to the same PDU session (e.g., MA PDU session). Alternatively, each of the multiple 3GPP user plane connections may correspond to one PDU session, i.e., different 3GPP user plane connections have different PDU session IDs, and in this case, the multiple 3GPP user plane connections do not need to be established by the same core network element.

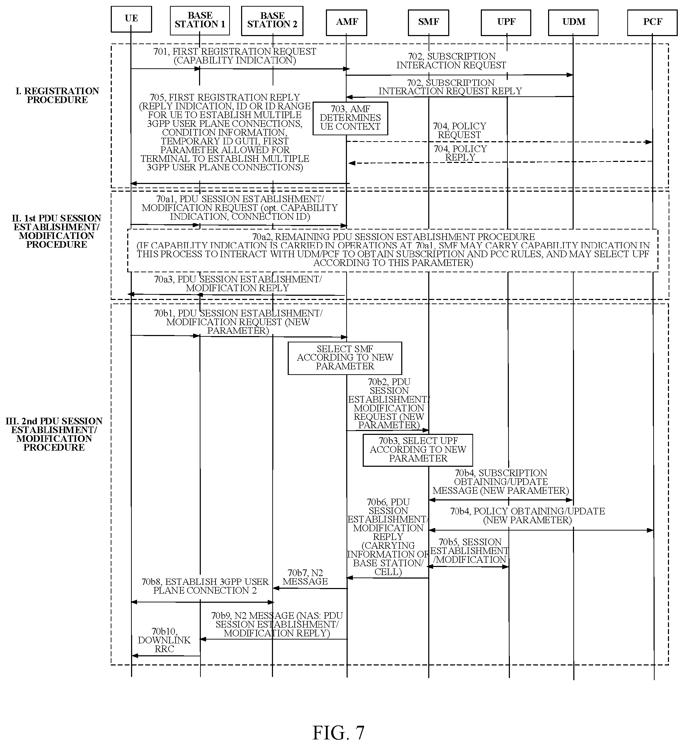

In this example, the sequence of initiating multi-session establishment/modification requests at the UE side is as follows. First, the UE initiates the registration procedure via base station 1 (i.e., the first access-network device corresponding to the first 3GPP control plane connection in the above embodiment). During this procedure, the negotiation of a related parameter (i.e., the negotiation of the information related to the multiple 3GPP user plane connections supported and/or requested by the terminal for establishment) is completed. Then, the UE initiates the 1st PDU session establishment/modification request message via the same base station 1. This request message may be the same as an existing PDU session establishment/modification, or optionally carry a "capability parameter". The network side then indicates base station 1 to establish a user plane connection (such as an air interface DRB) with the UE. Next, the UE initiates the 2nd PDU session establishment/modification request message (i.e., the second one of PDU session establishment/modification request messages) via the same base station 1. This request message may carry a parameter obtained during the registration procedure and a parameter related to the determination of base station 2. The network side then indicates base station 2 to establish a user plane connection (such as an air interface DRB) with the UE. A detailed illustration will be given with reference to FIG. 7.

### I. Registration procedure

At 701, a UE initiates a first registration request (i.e., the first request message) via an RRC connection established with base station 1. The first registration request contains a "capability indication". The capability indication indicates at least one of the following information: the UE supporting/requesting establishment of multiple 3GPP user plane connections, where by means of indicating that the UE supports/requests establishment of the multiple 3GPP user plane connections, the network side can subsequently determine that an application data flow may be subject to at least one of steering, splitting, or switching (SSS) in the multiple 3GPP user plane connections; the number of 3GPP user plane connections supported/requested by the UE for establishment; or a 3GPP RAT(s) supported/requested by the UE for establishing a 3GPP user plane connection(s), including but not limited to, NR, E-UTRA, satellite, etc.

It may be noted that, before initiating an NAS message for the first registration request, the UE has established the RRC connection with base station 1 at the access stratum. It may also be noted that, the 3GPP user plane connection refers to a user plane connection established via one or more 3GPP accesses (for example, NR base station, LTE base station, satellite access, or the like).

At 702, after receiving the first registration request from the UE, an AMF (the first core-network device) sends a subscription interaction request to a UDM and receives a subscription interaction request reply from the UDM.

The interaction with the UDM is initiated via the subscription interaction request. In addition to a subscription permanent identifier (SUPI) of the UE, the subscription interaction request may further carry the "capability indication".

The subscription interaction request reply may carry subscription information. The subscription information may include at least one of: whether the UE is allowed to establish the multiple 3GPP user plane connections, the number of 3GPP connections that the UE is allowed to establish, or frequency information corresponding to each 3GPP connection (for example, an RFSP and RFSPs for one or more 3GPP connections). The RFSP may be used for a base station to determine frequency information to be used when establishing an air interface connection for the UE.

At 703, the AMF determines a UE context according to the subscription information and/or a local policy. The UE context includes at least one of the following information.

A reply indication (i.e., the indication indicating whether the terminal is allowed to establish the multiple 3GPP user plane connections), which may indicate at least one of: whether the UE is allowed to perform multi-3GPP user plane connection establishment, or the number of 3GPP user plane connections allowed for establishment.

A first parameter allowed for the terminal to establish the multiple 3GPP user plane connections. The specific illustration thereof is the same as that in the above embodiment and will not be repeated.

An ID or ID range for the UE to establish the multiple 3GPP user plane connections. If the UE establishes the multiple 3GPP user plane connections via 3GPP access, these user plane connections may correspond to different connection IDs. A specific value of the connection ID may be allocated during the PDU session procedure. An ID of a 3GPP user plane connection and a PDU session ID are not the same parameter. The multiple 3GPP user plane connections may correspond to different PDU sessions and use different PDU session IDs, respectively. Alternatively, the multiple 3GPP user plane connections may correspond to the same PDU session, which means that the multiple 3GPP user plane connections may be anchored in the same user plane network element (such as UPF) and may share the same PDU session ID.

Condition information, i.e., a condition under which the terminal is allowed to establish the multiple 3GPP user plane connections (for example, location area or time).

A temporary ID GUTI.

Optionally, at 704, the AMF sends a policy request to a PCF and receives a policy reply sent by the PCF. Through operations at 704, the AMF may interact with the PCF to obtain a PCC policy.

At 705, the AMF sends a first registration reply (i.e., the first reply message) to the UE. The first registration reply may carry at least one of: the reply indication, the ID or ID range for the UE to establish the multiple 3GPP user plane connections, the condition information, the temporary ID GUTI, or the first parameter allowed for the terminal to establish the multiple 3GPP user plane connections.

### II. The 1st PDU session establishment/modification procedure

At 70a1, the UE initiates a PDU session establishment/modification request (i.e., the 1st second request message) via base station 1 corresponding to an NAS connection during the registration procedure.

At 70a2, perform the remaining PDU session establishment procedure. This procedure may be the same as an existing procedure, which is used for establishing the 1st 3GPP user plane connection. This connection is established via base station 1.

At 70a3, the AMF sends a PDU session establishment/modification reply to the UE.

Optionally, the UE may carry a capability indication in the PDU session establishment/modification request. If the UE carries the capability indication of the terminal in the PDU session establishment/modification request, then in operations at 70a2, the core-network side AMF may select an appropriate SMF accordingly, and/or the SMF may carry the capability indication in this process to interact with the UDM/PCF to obtain subscription and PCC rules, and may select a UPF according to this parameter.

Optionally, the UE may carry a "connection ID" in the PDU session establishment/modification request. The connection ID is used for identifying a current 3GPP user plane connection (for example, the current 3GPP user plane connection may be 3GPP user plane connection 1).

Optionally, the UE may carry a "connection ID range" in the PDU session establishment/modification request. In this case, the network side selects a value from the connection ID range as a connection ID to associate with a current 3GPP user plane connection (3GPP user plane connection 1) and returns the value to the UE in operations at 70a3.

### III. The 2nd (i.e., non-1st) PDU session establishment/modification procedure

At 70b1, the UE sends, via base station 1, to the core network AMF an NAS message, i.e., a PDU session establishment/modification request (i.e., the non-1st second request message) to which a new parameter is added. The new parameter includes at least one of the following.

A connection ID, which is used for identifying a current 3GPP user plane connection.

A connection ID range. If the connection ID range is carried, the network side subsequently selects a value from the range as a connection ID to associate with a current 3GPP user plane connection (for example, referred to as 3GPP user plane connection 2) and returns the value to the UE in operations at 70b9.

An association ID. Multiple PDU sessions share the same association ID. The UE may obtain the association ID (for example, carried in the first registration reply in operations at 705) during the registration procedure, or may generate the association ID by itself. The related illustration thereof is the same as that in the above embodiment and will not be repeated.

An access preference parameter (i.e., a first parameter requested and/or required by the UE for 3GPP user plane connection 2), which may include, for example, NTN or TN; and NR, E-UTRA, or WLAN (i.e., one or more RATs), etc., i.e., an RAN preferred (requested, expected, or suggested) by the UE for establishing or modifying this PDU session. Herein, the access preference parameter is used for the network side to determine and select an appropriate base station (base station 2) to establish 3GPP user plane connection 2.

A parameter related to a base station or a cell where the base station is located (i.e., the access-related parameter), i.e., a base station and/or a cell where the base station is located requested/suggested/expected by the UE for establishing or modifying the PDU session. Herein, before initiating this NAS procedure, the UE may determine this parameter according to a measurement result (for example, signal quality, RSRP, and the like of different base stations or cells) at the radio side. The parameter related to the base station or the cell where the base station is located may include at least one of an ID of the base station, an ID of the cell, a TAC, or the like.

It may be noted that, the UE may determine, according to the condition information (and/or the reply indication) in the operations at 705, whether to initiate the 2nd PDU session establishment/modification request, i.e., whether to perform operations at 70b1.

At 70b2, the AMF selects an SMF according to the new parameter and sends a PDU session establishment/modification request carrying the new parameter to the SMF.

At 70b3, the SMF selects a UPF according to a session-related parameter (for example, S-NSSAI or data network name (DNN)) and one or more of new parameters (for example, an association ID (where multi-user plane connections may be subject to SSS, and this group may use the same association ID) or an access preference parameter) obtained. This UPF may be the same as the UPF selected for the PDU session established first, so that user plane connections established during the two PDU session establishment/modification procedures can be associated (or data aggregation).

At 70b4, the SMF may carry the new parameter in a subscription obtaining/update message to enable the UDM to provide subscription information accordingly. In addition, the SMF may carry the new parameter in policy obtaining/update to interact with the PCF to obtain a PCC policy. When allocating the PCC policy, the PCF may determine the PCC policy according to the new parameter.

At 70b5, the SMF interacts with the UPF for session establishment/modification. Specifically, the SMF interacts with the UPF to establish or update a GTP tunnel configuration.

At 70b6, the SMF determines, according to the new parameter, that 3GPP user plane connection 2 is to be established via base station 2, and sends a PDU session establishment/modification reply to the AMF. The PDU session establishment/modification reply may carry information of a base station/cell, for example, information related to establishment of a connection with base station 2. That is, the SMF may return a PDU session establishment/modification reply message to the UE and base station 2 in an access network via the AMF. Specifically, the PDU session establishment/modification reply message sent by the SMF to the AMF may be Namf_Communication_N1N2Message_Transfer (N1N2 message).

It may be understood that, the determination of information of base station 2 by the SMF in operations at 70b6 may also be performed by the AMF. In this case, the information of the base station/cell may not be carried in the operations at 70b6, and instead, the information of the base station/cell may be determined by the AMF and then carried in a message in operations at 70b7. In addition, in the operations at 70b6, there may be two messages, which are respectively used for triggering operations at 70b7 and 70b8 and operations at 70b9.

At 70b7 and 70b8, the AMF sends an N2 message for air interface connection establishment to base station 2, so that base station 2 establishes 3GPP user plane connection 2 (or DRB) on an air interface with the UE.

Herein, before or during operations at 70b8 (establishing the DRB by the UE with base station 2), the UE has completed establishment of an RRC connection with base station 2.

At 70b9 and 70b10, the AMF sends, via base station 1, to the UE an N2 message (NAS message: PDU session establishment/modification reply) (which may contain the connection ID). In operations at 70b10, base station 1 sends to the UE a downlink RRC message, which carries the contents of the NAS message. It may be understood that, since the UE only has an NAS connection with base station 1, a downlink NAS reply message need to be sent to the UE via base station 1 (operations at 70b9 and 70b10), and establishment of the 2nd 3GPP user plane connection with the UE need to be triggered via base station 2 (operations at 70b7 and 70b8).

In addition, it may be noted that if the UE has established multiple 3GPP control plane connections, including a 3GPP control plane connection established via base station 2, then the above operations at 70b1 may be replaced by the UE sending, via base station 2, to the core network AMF the NAS message, i.e., the PDU session establishment/modification request (i.e., the non-1st second request message) to which the new parameter is added. Subsequent operations at 70b2 to 70b6 may remain unchanged. The operations at 70b7 and 70b8 may be replaced by: the AMF sending an N2 message (NAS message) to base station 2. The N2 message not only carries the NAS message (PDU session reply message) but also carries an indication parameter for triggering establishment of 3GPP user plane connection 2. That is, in addition to carrying the NAS message to be sent to the UE, an air interface message also triggers establishment of a DRB between the UE and base station 2. The operations at 70b9 and 70b10 may no longer be performed.

In an embodiment, the second request message is used for establishing multiple 3GPP user plane connections.

The first 3GPP control plane connection that the first request message requests to establish is any one of one or more 3GPP control plane connections to be established by the terminal. That is, in this embodiment, the first 3GPP control plane connection is the only 3GPP control plane connection to be established by the terminal, or the first 3GPP control plane connection may be any one of multiple 3GPP control plane connections of the terminal. For the sake of simplicity, in this embodiment, the first 3GPP control plane connection is still taken as an example for subsequent illustration. However, it may be noted that, the "first 3GPP control plane connection" may also be replaced by "another 3GPP control plane connection" (and an "access-network device corresponding to the another 3GPP control plane connection") among the multiple 3GPP control plane connections, which will not be described in detail below.

Sending the second request message by the terminal may refer to: sending the second request message by the terminal to the first core-network device via a first access-network device corresponding to the first 3GPP control plane connection. Accordingly, receiving the second request message by the first core-network device may refer to: receiving the second request message by the first core-network device from the terminal via a first access-network device corresponding to the first 3GPP control plane connection.

In this embodiment, the terminal may send the second request message to the first core-network device via the first access-network device corresponding to the first 3GPP control plane connection as follows. When a first condition is satisfied, the terminal sends the second request message to the first core-network device via the first access-network device corresponding to the first 3GPP control plane connection. The first condition and its related determination are the same as those in the above embodiment and will not be repeated.

The second request message may carry at least one of: a capability indication of the terminal, a first parameter requested and/or required for each 3GPP user plane connection among the multiple 3GPP user plane connections, or an access-related parameter. Further, the second request message may also carry at least one of: an ID of each 3GPP user plane connection among the multiple 3GPP user plane connections, an optional ID range for the multiple 3GPP user plane connections, an association ID, or a multi-3GPP RAT indication.

The processing by the first core-network device after receiving the second request message may include the following. The first core-network device selects a third core-network device and sends a PDU session establishment/modification request to the third core-network device, where a parameter carried in the PDU session establishment/modification request at least includes a parameter carried in the second request message. The first core-network device receives a PDU session establishment/modification reply message sent by the third core-network device.

The processing by the third core-network device may further include the following. The third core-network device receives a PDU session establishment/modification request sent by the first core-network device, and the third core-network device establishes or updates a GTP tunnel configuration with a fourth core-network device. The third core-network device sends a PDU session establishment/modification reply message to the first core-network device. The possible device types of the third core-network device and the fourth core-network device are the same as those in the above embodiment and will not be repeated. The illustration of establishing or updating the GTP tunnel configuration by the third core-network device with the fourth core-network device is the same as that in the above embodiment and will not be repeated.

Optionally, the PDU session establishment/modification reply message sent by the third core-network device to the first core-network device may carry information related to multiple access-network devices. The information related to the multiple access-network devices may include an ID of each of the multiple access-network devices.

For example, when the third core-network device is an SMF, the third core-network device may determine the multiple access-network devices as follows. The SMF determines each access-network device according to at least one of a first parameter requested and/or required for each 3GPP user plane connection or an access-related parameter carried in a session establishment/modification request. A specific processing manner of determining each access-network device by the SMF is similar to the manner of determining the *i*-th access-network device in the above embodiment, and thus will not be repeated.

Optionally, the PDU session establishment/modification reply message sent by the third core-network device to the first core-network device does not carry information related to multiple access-network devices. The processing by the first core-network device after receiving the PDU session establishment/modification reply message sent by the third core-network device may include the following. The first core-network device determines each access-network device based on at least one of the first parameter requested and/or required for each 3GPP user plane connection among the multiple 3GPP user plane connections or the access-related parameter. A specific processing manner of determining each access-network device by the first core-network device is similar to the manner of determining each access-network device by the third core-network device, and thus will not be repeated.

The first core-network device may send the air interface connection establishment message to the access-network device corresponding to the 3GPP user plane connection as follows. The first core-network device sends an N2 message for air interface connection establishment to each access-network device, so that each access-network device establishes the 3GPP user plane connection (or DRB) on an air interface with the UE.

In this embodiment, different 3GPP user plane connections among the multiple 3GPP user plane connections may correspond to different access-network devices. Access-network devices respectively corresponding to the multiple 3GPP user plane connections may include the first access-network device corresponding to the first 3GPP control plane connection. Regardless of whether the access-network devices respectively corresponding to the multiple 3GPP user plane connections include the first access-network device, the processing that may be further performed by the first core-network device includes: sending a second reply message to the first access-network device, where the second reply message may carry an ID of each of the multiple 3GPP user plane connections.

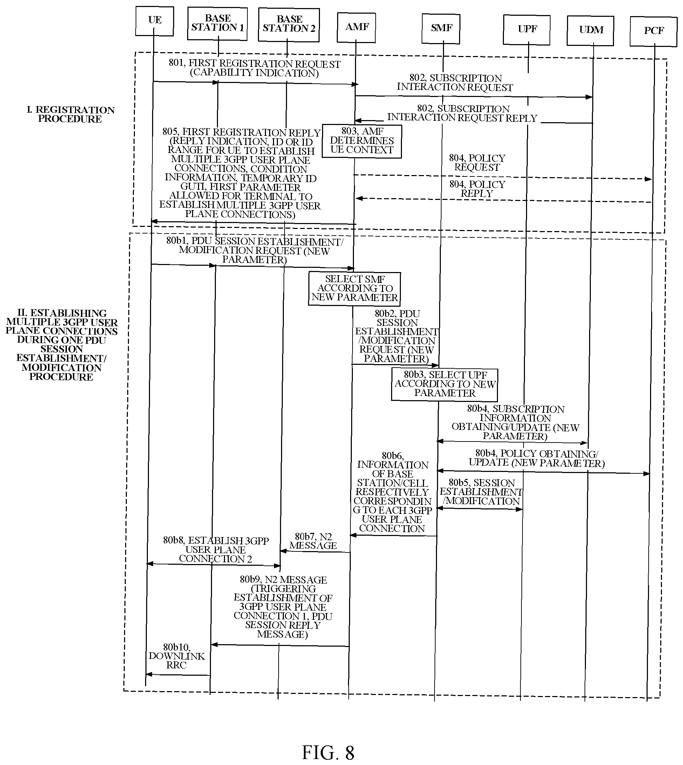

In this embodiment, a UE (terminal) still negotiates a related parameter during a registration procedure and initiates one PDU session procedure to establish the multiple 3GPP user plane connections. In this embodiment, the sequence of initiating multi-session establishment/modifications at the UE side is as follows. First, the UE initiates the registration procedure via base station 1 to complete the negotiation. Then, the UE initiates a PDU session establishment/modification request message via the same base station 1. In this process, according to new parameters such as a parameter "capability indication" reported by the UE, the network side determines multiple base stations/cells for establishing the multiple 3GPP user plane connections, so that the multiple 3GPP user plane connections can be established during one PDU session procedure. Specifically, an exemplary illustration will be given with reference to FIG. 8.
I. Registration procedure. Operations at 801 to 805 in this registration procedure are the same as operations at 701 to 705 in FIG. 7 and will not be repeated.
II. Establishing multiple 3GPP user plane connections during one PDU session establishment/modification procedure. In this example, establishment of two 3GPP user plane connections is taken as example for illustration, where the two 3GPP user plane connections are 3GPP user plane connection 1 and 3GPP user plane connection 2 respectively.

At 80b1, a UE sends, via base station 1, to a core network AMF an NAS message, i.e., a PDU session establishment/modification request (i.e., the second request message) to which a new parameter is added. It may be noted that in this example, the PDU session establishment/modification request indicates that the UE needs to establish the multiple 3GPP user plane connections.

The contents that may be included in the new parameter are similar to those in operations at 70b1. The only difference lies in that in this example, an access preference parameter carried in the new parameter in this step may provide a respective first parameter corresponding to each of the multiple 3GPP user plane connections, a connection ID range carried in the new parameter in this step is used for the network side to determine an ID of each of the multiple 3GPP user plane connections, and a parameter related to a base station or a cell where the base station is located (i.e., an access-related parameter) carried in the new parameter in this step is used for determining a base station(s)/cell(s) with which a 3GPP user plane connection(s) is to be established. The new parameter will not be described in detail herein.

Operations at 80b2 are the same as operations at 70b2 and will not be repeated.

At 80b3, an SMF selects a UPF according to a session-related parameter (for example, S-NSSAI or DNN) and one or more of new parameters (for example, an association ID (where multi-user plane connections may be subject to SSS, and this group may use the same association ID) or an access preference parameter) obtained.

Operations at 80b4 are the same as operations at 70b4, and operations at 80b5 are the same as operations at 70b5, which will not be repeated.

At 80b6, the SMF determines, according to the new parameter, that each 3GPP user plane connection among the multiple 3GPP user plane connections is to be established via a base station corresponding to the 3GPP user plane connection, and sends a PDU session establishment/modification reply to the AMF. The PDU session establishment/modification reply may carry information of a base station/cell respectively corresponding to each 3GPP user plane connection. That is, the SMF may return a PDU session establishment/modification reply message to the UE and the base station respectively corresponding to each 3GPP user plane connection via the AMF. Specifically, the PDU session establishment/modification reply message sent by the SMF to the AMF may be Namf_Communication_N1N2Message_Transfer (N1N2 message).

It may be understood that, the determination of the information of the base station respectively corresponding to each 3GPP user plane connection by the SMF in operations at 80b6 may also be performed by the AMF. In this case, the information of the base station/cell may not be carried in the operations at 80b6, and instead, the information of the base station/cell may be determined by the AMF and then carried in a message in operations at 80b7. In addition, in the operations at 80b6, there may be two messages, which are respectively used for triggering operations at 80b7 and 80b8 and operations at 80b9.

At 80b7 and 80b8, the AMF sends an N2 message for air interface connection establishment to base station 2, so that base station 2 establishes 3GPP user plane connection 2 (or DRB) on an air interface with the UE. Herein, before or during operations at 80b8 (establishing the DRB by the UE with base station 2), the UE has completed establishment of an RRC connection with base station 2.

At 80b9 and 80b10, the AMF sends an N2 message (NAS message) to base station 1. The N2 message not only carries the NAS message (PDU session reply message) but is used for triggering establishment of 3GPP user plane connection 1. That is, in addition to carrying the NAS message to be sent to the UE, an air interface message also triggers establishment of a DRB between the UE and base station 1. In operations at 80b10, base station 1 sends to the UE a downlink RRC message, which carries the contents of the NAS message. In addition, base station 1 and the UE may initiate establishment of 3GPP user plane connection 1 using a control resource. For the sake of simplicity, FIG. 8 only exemplarily illustrates downlink RRC (message), and FIG. 8 does not constitute limitation on the operations at 80b10.

In this example, the sequence of operations at 80b7 and 80b8 and the sequence of operations at 80b9 and 80b10 may be swapped.

In some embodiments, during the 1st session establishment procedure, the terminal negotiates or obtains the information related to the multiple 3GPP user plane connections supported and/or requested by the terminal for establishment. In this embodiment, the first request message is used for establishing a first 3GPP user plane connection.

In this embodiment, the first request message may be a first session establishment request or a first session modification request, and the first reply message may be a first session establishment reply message or a first session modification reply message.

Before initiating the first request message, the terminal has established one or more 3GPP control plane connections. The first request message may be sent via any one of the one or more 3GPP control plane connections.

For example, in this embodiment, the first request message is still sent via a first 3GPP control plane connection. The terminal may send the first request message as follows. The terminal sends the first request message to the first core-network device via an RRC connection established with a first access-network device. Accordingly, the first core-network device may receive the first request message as follows. The first core-network device receives the first request message from the terminal via a first access-network device. The first core-network device may include one or more AMFs.

Optionally, the first request message may carry a capability indication of the terminal. The related illustration of the capability indication of the terminal is the same as that in the above embodiment and will not be repeated.

Optionally, the first request message may carry at least one of: an ID of the first 3GPP user plane connection or an optional ID range for the multiple 3GPP user plane connections. Exemplarily, the first request message may carry only the ID of the first 3GPP user plane connection. The ID of the first 3GPP user plane connection may be determined by the terminal, and a determination manner thereof is not limited in this embodiment. Exemplarily, the first request message carries only the optional ID range for the multiple 3GPP user plane connections. The ID of the first 3GPP user plane connection is determined by the core network side according to the optional ID range for the multiple 3GPP user plane connections. Exemplarily, the first request message carries the ID of the first 3GPP user plane connection and the optional ID range for the multiple 3GPP user plane connections. For example, the ID of the first 3GPP user plane connection may be determined by the terminal, where the terminal itself generates the optional ID range for the multiple 3GPP user plane connections, and determines the ID of the first 3GPP user plane connection according to the optional ID range for the multiple 3GPP user plane connections. The optional ID range for the multiple 3GPP user plane connections is used for the core network side to determine an ID of another 3GPP user plane connection to be subsequently established by the terminal.

The processing by the first core-network device after receiving the first request message may include the following. The first core-network device selects a third core-network device and sends a first PDU session establishment/modification request to the third core-network device, where a parameter carried in the first PDU session establishment/modification request at least includes a parameter carried in the first request message. The first core-network device receives a first PDU session establishment/modification reply message sent by the third core-network device. The first core-network device sends the first reply message to the terminal. Accordingly, the processing by the third core-network device may further include the following. The third core-network device receives a first PDU session establishment/modification request sent by the first core-network device, and the third core-network device establishes or updates a GTP tunnel configuration with a fourth core-network device. The third core-network device sends a first PDU session establishment/modification reply message to the first core-network device. The third core-network device may include one or more SMFs, and the fourth core-network device may include a UPF. Establishing or updating the GTP tunnel configuration by the third core-network device with the fourth core-network device is similar to that in the above embodiment and will not be repeated. The first reply message may also be determined by the first core-network device based on subscription information of the terminal and/or a local policy, which will not be described in detail.

The first 3GPP user plane connection may also be established via a first access-network device corresponding to a first 3GPP control plane connection.

The first reply message carries at least one of: a first parameter allowed for the terminal to establish one or more 3GPP user plane connections except the first 3GPP user plane connection, or an indication indicating whether the terminal is allowed to establish the one or more 3GPP user plane connections except the first 3GPP user plane connection.

The related illustration of the first parameter allowed for the terminal to establish the one or more 3GPP user plane connections except the first 3GPP user plane connection is similar to the illustration of the first parameter allowed for the terminal to establish the multiple 3GPP user plane connections in the above embodiment. The only difference lies in that in this embodiment, since the terminal first establishes the first 3GPP user plane connection, the first core-network device needs to send only the first parameter allowed for the terminal to establish the one or more 3GPP user plane connections except the first 3GPP user plane connection, which will not be repeated.

The related illustration of the indication indicating whether the terminal is allowed to establish the one or more 3GPP user plane connections except the first 3GPP user plane connection is similar to the illustration of the indication indicating whether the terminal is allowed to establish the multiple 3GPP user plane connections in the above embodiment. The only difference lies in that in this embodiment, since the first 3GPP user plane connection is first established, the first core-network device needs to send only the indication indicating whether the terminal is allowed to establish the one or more 3GPP user plane connections except the first 3GPP user plane connection, which will not be repeated herein.

In addition to at least one of the first parameter allowed for the terminal to establish the one or more 3GPP user plane connections except the first 3GPP user plane connection or the indication indicating whether the terminal is allowed to establish the one or more 3GPP user plane connections except the first 3GPP user plane connection, the first reply message may also contain at least one of: an association ID, a condition under which the terminal is allowed to establish the one or more 3GPP user plane connections except the first 3GPP user plane connection, an optional ID range for the one or more 3GPP user plane connections, or a temporary ID.

The condition under which the terminal is allowed to establish the one or more 3GPP user plane connections except the first 3GPP user plane connection and the optional ID range for the one or more 3GPP user plane connections are similar to those in the above embodiment and will not be repeated.

After the terminal receives the first reply message, the method further includes the following. The terminal sends a second request message, where the second request message is used for establishing the one or more 3GPP user plane connections except the first 3GPP user plane connection. Accordingly, after the first core-network device sends the first reply message, the method may further include the following. The first core-network device receives a second request message.

The second request message may be a second session establishment request or a second session modification request. The second reply message may be a second session establishment reply message or a second session modification reply message.

The second request message carries at least one of: a first parameter requested and/or required for each 3GPP user plane connection among the one or more 3GPP user plane connections, an access-related parameter, or a capability indication of the terminal.

The first parameter requested and/or required for each 3GPP user plane connection among the one or more 3GPP user plane connections specifically refers to: a first parameter requested and/or required by the terminal for each of the one or more 3GPP user plane connections except the first 3GPP user plane connection. The related illustration of the first parameter requested and/or required for each 3GPP user plane connection among the one or more 3GPP user plane connections is similar to the illustration in the above embodiment. The only difference from the above embodiment lies in that in this embodiment, the one or more 3GPP user plane connections are 3GPP user plane connections other than the first 3GPP user plane connection, which will not be repeated.

In addition to at least one of the first parameter requested and/or required for each 3GPP user plane connection among the one or more 3GPP user plane connections, the access-related parameter, or the capability indication of the terminal, the second request message may further carry at least one of: an ID of each of the one or more 3GPP user plane connections except the first 3GPP user plane connection, an optional ID range for the one or more 3GPP user plane connections, an association ID, or a multi-3GPP RAT indication. The related illustration of each parameter is also similar to that in the above embodiment and will not be repeated.

Optionally, after the terminal establishes the first 3GPP user plane connection, sending the second request message by the terminal may refer to: sending one or more second request messages by the terminal to the first core-network device, where each second request message is used for establishing one 3GPP user plane connection except the first 3GPP user plane connection, and different second request messages are used for requesting establishment of different 3GPP user plane connections. Accordingly, receiving the second request message by the first core-network device may refer to: receiving one or more second request messages by the first core-network device from the terminal.

Herein, before sending the one or more second request messages to the first core-network device, the terminal may still determine whether a first condition is satisfied. The related illustration of the first condition is the same as that in the above embodiment and will not be repeated.

Exemplarily, the terminal has established only one 3GPP control plane connection before establishing the first 3GPP user plane connection, which is still referred to as the first 3GPP user plane connection. Sending the second request message by the terminal may refer to: sending the one or more second request messages by the terminal to the first core-network device via a first access-network device corresponding to a first 3GPP control plane connection. Accordingly, receiving the second request message by the first core-network device may refer to: receiving the one or more second request messages by the first core-network device from the terminal via a first access-network device corresponding to a first 3GPP control plane connection.

In this example, the processing (such as interaction with the third core-network device, establishment of one 3GPP user plane connection based on each second request message, etc.) performed by the first core-network device may be similar to that in the above example and will not be repeated.

Exemplarily, the terminal has established multiple 3GPP control plane connections before establishing the first 3GPP user plane connection. Each of the one or more second request messages sent by the terminal may be sent via an access-network device corresponding to one of one or more 3GPP control plane connections. For example, the *i*-th second request message may be sent via an access-network device corresponding to the *i*-th 3GPP control plane connection. The processing performed by the first core-network device may be similar to that in the above example. The difference lies in that the first core-network device (or the third core-network device) may no longer select an access-network device corresponding to the *i*-th 3GPP user plane connection, and may directly determine an access-network device corresponding to the *i*-th 3GPP control plane connection as the access-network device corresponding to the *i*-th 3GPP user plane connection. The difference may also lie in that the first core-network device may send the *i*-th second reply message to the access-network device corresponding to the *i*-th 3GPP control plane connection. Other processing will not be repeated.

Optionally, after the terminal establishes the first 3GPP user plane connection, sending the second request message by the terminal may refer to: sending one second request message by the terminal to the first core-network device, where the second request message is used for establishing multiple 3GPP user plane connections except the first 3GPP user plane connection. Accordingly, receiving the second request message by the first core-network device may refer to: receiving the second request message by the first core-network device from the terminal.

Before the terminal establishes the first 3GPP user plane connection, the terminal has established one or more 3GPP control plane connections. For the sake of simplicity, in this embodiment, the first 3GPP control plane connection is still taken as an example for subsequent illustration. However, it may be noted that, the "first 3GPP control plane connection" may also be replaced by "another 3GPP control plane connection" (and an "access-network device corresponding to the another 3GPP control plane connection") among the multiple 3GPP control plane connections, which will not be described in detail below.

Sending the second request message by the terminal may refer to: sending the second request message by the terminal to the first core-network device via a first access-network device corresponding to the first 3GPP control plane connection. Accordingly, receiving the second request message by the first core-network device may refer to: receiving the second request message by the first core-network device from the terminal via a first access-network device corresponding to the first 3GPP control plane connection. In this example, the processing (such as interaction with the third core-network device, establishment of multiple 3GPP user plane connections based on one second request message, etc.) performed by the first core-network device may be similar to that in the above example and will not be repeated.

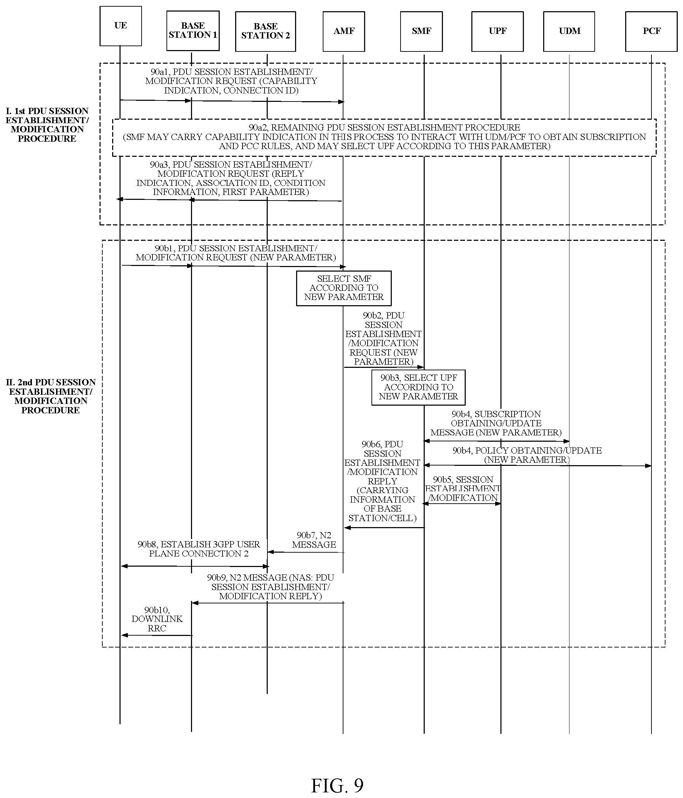

An exemplary illustration of the solution provided in this embodiment will be given. In this embodiment, a registration procedure is not affected. After registration, a UE initiates two PDU session procedures as follows. First, the UE initiates the registration procedure via base station 1. This registration procedure is the same as that in the related art and has no new impact. Then, the UE initiates the 1st PDU session establishment/modification request message via the same base station 1. In this process, the negotiation of a capability and parameter related to establishment of multi-3GPP user plane connections is completed according to a parameter "capability indication" reported by the UE. The UE initiates the 2nd PDU session establishment/modification request message via the same base station 1. This request message may carry a parameter obtained during the registration procedure and a parameter related to the determination of base station 2. The network side then indicates base station 2 to establish a user plane connection (such as an air interface DRB) with the UE. Specifically, a PDU session procedure is illustrated in FIG. 9, and includes the following procedures.

### I. The 1st PDU session establishment/modification procedure

At 90a1, a UE adds a "capability indication" to a PDU session establishment/modification request (i.e., the first request message) to be sent to an AMF. The "capability indication" is the same as that in the above embodiment and will not be repeated.

Optionally, the UE may carry a "connection ID" in the PDU session establishment/modification request. The connection ID is used for identifying a current 3GPP user plane connection (for example, an ID of 3GPP user plane connection 1).

Optionally, the UE may carry a "connection ID range" (i.e., an optional ID range) in the PDU session establishment/modification request. In this case, the network side subsequently selects a value from the range as a connection ID to associate with a current 3GPP user plane connection and returns the value to the UE in operations at 90b9.

At 90a2, perform the remaining PDU session establishment procedure. In this process, an SMF may carry the capability indication to interact with a UDM/PCF to obtain subscription and PCC rules, and may select a UPF according to this parameter. Other procedures are the same as existing PDU session establishment/modification procedures.

At 90a3, the SMF/AMF sends, via base station 1, to the UE a PDU session establishment/modification reply (i.e., the first reply message), which contains at least one of: a reply indication, an association ID, condition information, or a first parameter allowed for the terminal to establish one or more 3GPP user plane connections (except 3GPP user plane connection 1). The above parameters are merely taken as an example for illustration, and do not constitute limitation on all contents that may be carried in the PDU session establishment/modification reply. The related explanation of the above parameters is the same as that in the above embodiment and will not be repeated.

II. The 2nd PDU session establishment/modification procedure. The related illustration of operations at 90b1 to 90b10 is the same as the related illustration of operations at 70b1 to 70b10 illustrated in FIG. 7 and will not be repeated.

In some embodiments, the terminal initiates establishment of multiple 3GPP user plane connections during the 1st session establishment procedure. In this embodiment, the first request message is used for establishing the multiple 3GPP user plane connections. The first request message may be a first session establishment request or a first session modification request.

Before initiating the first request message, the terminal has established one or more 3GPP control plane connections. The first request message may be sent via any one of the one or more 3GPP control plane connections.

In addition to the capability indication of the terminal, the first request message further carries at least one of: a first parameter requested and/or required for each 3GPP user plane connection among the multiple 3GPP user plane connections or an access-related parameter.

The illustration of the first parameter and the access-related parameter is the same as that in the above embodiment and will not be repeated.

Optionally, the first request message may carry at least one of: an ID of each of the multiple 3GPP user plane connections, an optional ID range for the multiple 3GPP user plane connections, or a multi-3GPP RAT indication. The related illustration of the above parameters is the same as that in the above embodiment and will not be repeated.

The processing by the first core-network device after receiving the first request message further includes the following. The first core-network device sends an air interface connection establishment message to an access-network device corresponding to the 3GPP user plane connection. The air interface connection establishment message is used for establishing the 3GPP user plane connection on an air interface between the access-network device corresponding to the 3GPP user plane connection and the terminal. The access-network device corresponding to the 3GPP user plane connection is determined based on at least one of a first parameter requested and/or required for the 3GPP user plane connection or an access-related parameter. Different 3GPP user plane connections correspond to different access-network devices.

Specifically, the processing by the first core-network device after receiving the first request message may include the following. The first core-network device selects a third core-network device and sends a first PDU session establishment/modification request to the third core-network device, where a parameter carried in the first PDU session establishment/modification request at least includes a parameter carried in the first request message. The first core-network device receives a first PDU session establishment/modification reply message sent by the third core-network device. The first core-network device sends the air interface connection establishment message to the access-network device corresponding to the 3GPP user plane connection.

The processing by the third core-network device may further include the following. The third core-network device receives a first PDU session establishment/modification request sent by the first core-network device, and the third core-network device establishes or updates a GTP tunnel configuration with a fourth core-network device. The third core-network device sends a first PDU session establishment/modification reply message to the first core-network device.

The possible device types of the third core-network device and the fourth core-network device are the same as those in the above embodiment and will not be repeated. The illustration of establishing or updating the GTP tunnel configuration by the third core-network device with the fourth core-network device is the same as that in the above embodiment and will not be repeated.

Optionally, the first PDU session establishment/modification reply message sent by the third core-network device to the first core-network device carries information related to multiple access-network devices. The information related to the multiple access-network devices may include an ID of each of the multiple access-network devices. A manner of determining the multiple access-network devices by the third core-network device is similar to that in the above embodiment and will not be repeated.

Optionally, the first PDU session establishment/modification reply message sent by the third core-network device to the first core-network device does not carry information related to multiple access-network devices. The first core-network device determines each access-network device based on at least one of the first parameter requested and/or required for each 3GPP user plane connection among the multiple 3GPP user plane connections or the access-related parameter. A specific processing manner of determining each access-network device by the first core-network device is similar to that in the above embodiment and will not be repeated.

The first core-network device may send the air interface connection establishment message to the access-network device corresponding to the 3GPP user plane connection as follows. The first core-network device sends an N2 message for air interface connection establishment to each access-network device, so that each access-network device establishes the 3GPP user plane connection on an air interface with the UE.

In this embodiment, different 3GPP user plane connections among the multiple 3GPP user plane connections may correspond to different access-network devices.

Assuming that the first request message is sent via a first access-network device corresponding to a first 3GPP control plane connection, access-network devices respectively corresponding to the multiple 3GPP user plane connections may include the first access-network device corresponding to the first 3GPP control plane connection. Further, regardless of whether the access-network devices respectively corresponding to the multiple 3GPP user plane connections include the first access-network device, the processing that may be further performed by the first core-network device includes: sending a first reply message to the first access-network device.

The first reply message may carry an ID of each of the multiple user plane connections. Further, the first reply message may also carry at least one of an association ID, an indication indicating that the terminal is allowed to establish the multiple user plane connections, or the like.

The first reply message may be a first session establishment reply message or a first session modification reply message.

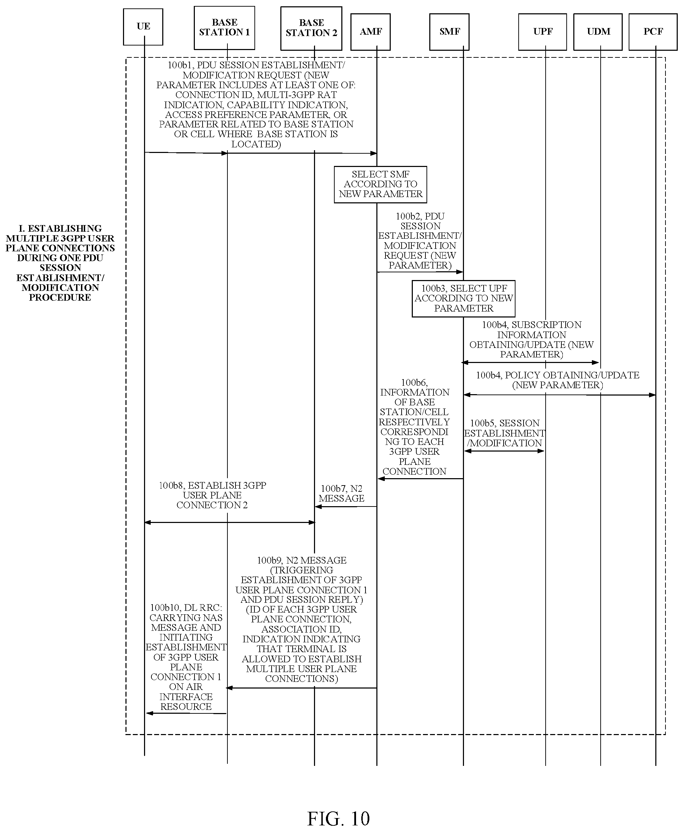

In this embodiment, a registration procedure is not affected. A UE initiates one PDU session procedure to establish the multiple user plane connections. The processing may be as follows. The UE initiates the registration procedure via base station 1. This registration procedure is the same as that in the related art and has no new impact. Then, the UE initiates a PDU session establishment/modification request message via the same base station 1. In this process, according to new parameters such as a parameter "capability indication" reported by the UE, the network side determines multiple base stations/cells for establishing the multiple 3GPP user plane connections, so that the multiple 3GPP user plane connections can be negotiated and established during one PDU session procedure. With reference to FIG. 10, the details may be as follows.

The registration procedure is not affected. An NAS connection is established via base station 1, and multiple 3GPP user plane connections are established during one PDU session establishment/modification procedure.

At 100b1, a UE sends, via base station 1, to a core network AMF an NAS message, i.e., a PDU session establishment/modification request to which a new parameter is added. In this example, the PDU session establishment/modification request indicates that the UE needs to establish multiple 3GPP user plane connections.

The new parameter includes at least one of: a connection ID (an ID of each of the multiple 3GPP user plane connections), a multi-3GPP RAT indication, a capability indication, an access preference parameter (i.e., a first parameter requested and/or required by the UE for 3GPP user plane connection 2), or a parameter related to a base station or a cell where the base station is located (i.e., the access-related parameter). The detailed illustration of the above new parameters is the same as that in the above embodiment and thus will not be repeated.

Operations at 100b2 to 100b8 are the same as operations at 80b2 to 80b8 in the above example in FIG. 8 and will not be repeated.

At 100b9 and 100b10, the AMF sends an N2 message (NAS message) to base station 1. The N2 message not only carries the NAS message (PDU session reply message) but is used for triggering establishment of 3GPP user plane connection 1. That is, in addition to carrying the NAS message to be sent to the UE, an air interface message also triggers establishment of a DRB between the UE and base station 1. The PDU session reply message in the N2 message (NAS message) may also carry at least one of: an ID of each user plane connection, an association ID, an indication indicating that the terminal is allowed to establish multiple user plane connections, or the like.

In operations at 100b10, base station 1 sends to the UE a downlink RRC message, which carries the contents of the NAS message. In addition, base station 1 and the UE may initiate establishment of 3GPP user plane connection 1 using a control resource.

In this example, the sequence of operations at 100b7 and 100b8 and the sequence of operations at 100b9 and 100b10 may be swapped.

In some possible implementations, the terminal sends the first request message as follows. The terminal sends the first request message via a first 3GPP control plane connection. The first request message is used for establishing or modifying a second 3GPP user plane connection, and the second 3GPP user plane connection and the first 3GPP control plane connection correspond to different first parameters.

The first request message may be a PDU session establishment/modification request. The first 3GPP control plane connection may refer to any one of one or more 3GPP control plane connections currently established by the terminal.

The second 3GPP user plane connection and the first 3GPP control plane connection corresponding to different first parameters may mean that the second 3GPP user plane connection and the first 3GPP control plane connection correspond to different RATs and/or different network types and/or different system types. For example, an RAT corresponding to the second 3GPP user plane connection is NR, and an RAT corresponding to the first 3GPP control plane connection is satellite. For another example, a network type corresponding to the second 3GPP user plane connection is TN, and a network type corresponding to the first 3GPP control plane connection is NTN. For another example, a network type corresponding to the second 3GPP user plane connection is PLMN, and a network type corresponding to the first 3GPP control plane connection is NPN. For another example, a system type corresponding to the second 3GPP user plane connection is 5GS, and a system type corresponding to the first 3GPP control plane connection is EPS.

The first core-network device sends the first reply message as follows. The first core-network device sends the first reply message to the terminal via the first 3GPP control plane connection, where the first reply message indicates an establishment result or a modification result of the second 3GPP user plane connection, and the second 3GPP user plane connection is one of the multiple 3GPP user plane connections supported by the terminal for establishment. The terminal receives the first reply message as follows. The terminal receives the first reply message via the first 3GPP control plane connection, where the first reply message indicates that establishment or a modification of the second 3GPP user plane connection is successful, and the second 3GPP user plane connection is one of the multiple 3GPP user plane connections supported by the terminal for establishment.

After the first core-network device receives the first request message from the terminal via the first 3GPP control plane connection, the method further includes the following. The first core-network device sends a first message to an access-network device corresponding to the second 3GPP user plane connection. The first message indicates at least one of: establishment of the second 3GPP user plane connection on an air interface between the access-network device corresponding to the second 3GPP user plane connection and the terminal, addition or deletion or update of a QoS parameter corresponding to the second 3GPP user plane connection, or addition or deletion or update of a QoS flow corresponding to the second 3GPP user plane connection.

In an embodiment, the first request message is used for establishing a second 3GPP user plane connection. The first request message carries at least one of: a first parameter requested and/or required for the second 3GPP user plane connection, an access-related parameter, or an ID of the second 3GPP user plane connection. That is, the second 3GPP user plane connection may be a 3GPP user plane connection currently requested for establishment among the multiple 3GPP user plane connections supported by the terminal for establishment, i.e., the first request message is used for requesting the core network side to establish the second 3GPP user plane connection.

It may be noted that, the terminal may not have established any 3GPP user plane connection before requesting establishment of the second 3GPP user plane connection, or the terminal may have established another 3GPP user plane connection before requesting establishment of the second 3GPP user plane connection. Both cases fall within the protection scope of this embodiment.

The related illustration of the first parameter requested and/or required for the second 3GPP user plane connection and the illustration of the access-related parameter are similar to those in the above embodiment and will not be repeated. The ID of the second 3GPP user plane connection carried in the first request message may be locally generated by the terminal.

The processing by the first core-network device after receiving the first request message may include the following. The first core-network device selects a third core-network device and sends a PDU session establishment/modification request to the third core-network device, where a parameter carried in the PDU session establishment/modification request at least includes a parameter carried in the first request message. The first core-network device receives a PDU session establishment/modification reply message sent by the third core-network device.

The processing by the third core-network device may further include the following. The third core-network device receives a PDU session establishment/modification request sent by the first core-network device, and the third core-network device establishes or updates a GTP tunnel configuration with a fourth core-network device. The third core-network device sends a PDU session establishment/modification reply message to the first core-network device. The illustration of establishing or updating the GTP tunnel configuration by the third core-network device with the fourth core-network device is the same as that in the above embodiment and will not be repeated.

Optionally, the PDU session establishment/modification reply message sent by the third core-network device to the first core-network device carries an ID of an access-network device corresponding to the second 3GPP user plane connection. For example, when the third core-network device is an SMF, the SMF determines the access-network device corresponding to the second 3GPP user plane connection according to at least one of a first parameter requested and/or required for the second 3GPP user plane connection or an access-related parameter carried in a session establishment/modification request.

Optionally, the PDU session establishment/modification reply message sent by the third core-network device to the first core-network device does not carry an ID of an access-network device corresponding to the second 3GPP user plane connection. The processing by the first core-network device after receiving the PDU session establishment/modification reply message sent by the third core-network device may include the following. The first core-network device determines the access-network device corresponding to the second 3GPP user plane connection based on at least one of a first parameter requested and/or required for the second 3GPP user plane connection or an access-related parameter. A specific processing manner of determining the access-network device corresponding to the second 3GPP user plane connection by the first core-network device is similar to the manner of determining the access-network device corresponding to the second 3GPP user plane connection by the third core-network device, and thus will not be repeated. In this embodiment, the access-network device corresponding to the second 3GPP user plane connection may be different from the access-network device (the first access-network device) corresponding to the first 3GPP control plane connection.

After determining the access-network device corresponding to the second 3GPP user plane connection, the first core-network device sends a first message to the access-network device corresponding to the second 3GPP user plane connection, where the first message indicates establishment of the second 3GPP user plane connection on an air interface between the access-network device corresponding to the second 3GPP user plane connection and the terminal. That is, the first core-network device triggers establishment of a 3GPP user plane connection (or DRB) on an air interface between the access-network device corresponding to the second 3GPP user plane connection and the UE.

Further, after the terminal completes establishment of the second 3GPP user plane connection, the terminal may also send an establishment complete notification to the third core-network device. Accordingly, the third core-network device sends to the first core-network device information indicating that establishment of the second 3GPP user plane connection is successful. After receiving information indicating an establishment result (for example, successful establishment) of the second 3GPP user plane connection, the first core-network device sends the first reply message to the terminal via the first 3GPP control plane connection. The first reply message may indicate that establishment of the second 3GPP user plane connection is successful. The first reply message may also carry the ID of the second 3GPP user plane connection.

In an embodiment, the first request message is used for modifying a second 3GPP user plane connection. The first request message may carry an ID of the second 3GPP user plane connection.

That is, the second 3GPP user plane connection may be an established 3GPP user plane connection among the multiple 3GPP user plane connections supported by the terminal for establishment, and the established second 3GPP user plane connection is modified based on the first request message. It may be noted that, the second 3GPP user plane connection may be one of multiple 3GPP user plane connections established by the terminal, or may be the only 3GPP user plane connection established by the terminal, which is not limited in this embodiment. In this embodiment, an access-network device corresponding to the second 3GPP user plane connection may be different from the access-network device (the first access-network device) corresponding to the first 3GPP control plane connection.

The processing by the first core-network device after receiving the first request message may include the following. The first core-network device sends a PDU session establishment/modification request to a third core-network device, where a parameter carried in the PDU session establishment/modification request at least includes a parameter carried in the first request message. The first core-network device receives a PDU session establishment/modification reply message sent by the third core-network device.

The processing by the third core-network device may further include the following. The third core-network device receives a PDU session establishment/modification request sent by the first core-network device, and the third core-network device establishes or updates a GTP tunnel configuration with a fourth core-network device. The third core-network device sends a PDU session establishment/modification reply message to the first core-network device.

After receiving the PDU session establishment/modification reply message sent by the third core-network device, the first core-network device may send a first message to the access-network device corresponding to the second 3GPP user plane connection. The first message indicates at least one of: addition or deletion or update of a QoS parameter corresponding to the second 3GPP user plane connection, or addition or deletion or update of a QoS flow corresponding to the second 3GPP user plane connection.

Herein, the addition or deletion or update of the QoS flow corresponding to the second 3GPP user plane connection may refer to adding or deleting or updating a filter of the QoS flow corresponding to the second 3GPP user plane connection or a parameter in the filter of the QoS flow corresponding to the second 3GPP user plane connection, for example, adding an IP address to the filter of the QoS flow corresponding to the second 3GPP user plane connection, deleting an IP address from the filter of the QoS flow corresponding to the second 3GPP user plane connection, etc., which will not be enumerated or limited herein.

After receiving the first message, the access-network device corresponding to the second 3GPP user plane connection may send the first message to the terminal, so that the terminal synchronizes at least one of: addition or deletion or update of the QoS parameter corresponding to the second 3GPP user plane connection, or addition or deletion or update of the QoS flow corresponding to the second 3GPP user plane connection.

Further, after the terminal completes modification of the second 3GPP user plane connection, the terminal may also send a modification complete notification to the third core-network device. Accordingly, the third core-network device sends to the first core-network device information indicating a modification result (for example, successful modification) of the second 3GPP user plane connection. After receiving information indicating that modification of the second 3GPP user plane connection is successful, the first core-network device sends the first reply message to the terminal via the first 3GPP control plane connection. The first reply message may indicate that modification of the second 3GPP user plane connection is successful. The first reply message may also carry the ID of the second 3GPP user plane connection.

It may be noted that, different 3GPP user plane connections involved in embodiments of the disclosure correspond to different access-network devices, which may be different access-network devices under different RATs and/or different system types or may be different access-network devices under the same RAT and/or the same system. For example, the access-network device corresponding to the second 3GPP user plane connection being different from the first access-network device corresponding to the first 3GPP control plane connection may mean that the access-network device corresponding to the second 3GPP user plane connection and the first access-network device corresponding to the first 3GPP control plane connection are access-network devices under different RATs and/or different systems, or the access-network device corresponding to the second 3GPP user plane connection and the first access-network device corresponding to the first 3GPP control plane connection are different access-network devices under the same RAT and/or the same system.

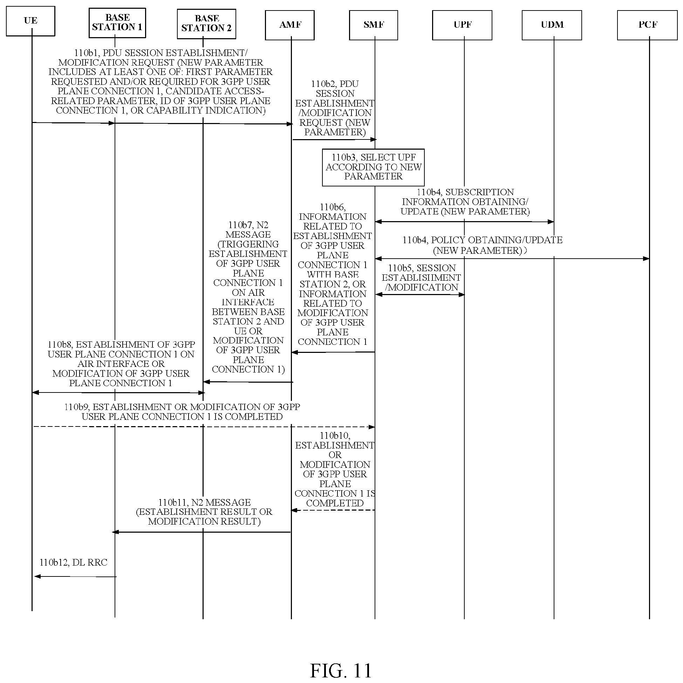

With reference to FIG. 11, the details may be as follows.

At 110b1, a UE sends, via base station 1, to a core network AMF an NAS message, i.e., a PDU session establishment/modification request (i.e., the first request message) to which a new parameter is added. In this example, the PDU session establishment/modification request is used for establishing or modifying 3GPP user plane connection 1.

The new parameter includes at least one of: a first parameter requested and/or required for 3GPP user plane connection 1, an access-related parameter, an ID of 3GPP user plane connection 1, a capability indication, or the like. The detailed illustration of the above new parameters is the same as that in the above embodiment and thus will not be repeated.

Operations at 110b2 to 110b5 are the same as operations at 70b2 to 70b5 in the above example in FIG. 7 and will not be repeated.

At 110b6, an SMF sends a PDU session establishment/modification reply to the AMF. The PDU session establishment/modification reply may carry information of a base station/cell, for example, information related to establishment of 3GPP user plane connection 1 with base station 2, or information related to modification of 3GPP user plane connection 1.

It may be understood that, if the PDU session establishment/modification request in operations at 110b1 is used for establishing 3GPP user plane connection 1, then in operations at 110b6, the SMF may determine base station 2 based on the first parameter and/or the access-related parameter. In this case, the PDU session establishment/modification reply in the operations at 110b6 may carry the information of the base station/cell.

Alternatively, the determination of base station 2 based on the first parameter and/or the access-related parameter may be performed by the AMF. In this case, the PDU session establishment/modification reply in the operations at 110b6 may not carry the information of the base station/cell, and instead, the information of the base station/cell may be determined by the AMF and then carried in a message in operations at 110b7.

At 110b7 and 110b8, the AMF sends an N2 message (for example, the first message in the above embodiment) to base station 2. The N2 message is used for triggering establishment of 3GPP user plane connection 1 on an air interface between base station 2 and the UE or modification of 3GPP user plane connection 1. The modification of 3GPP user plane connection 1 may refer to adding, deleting, or updating a QoS parameter or QoS flow corresponding to 3GPP user plane connection 1.

Specifically, if the PDU session establishment/modification request in the operations at 110b1 is used for establishing 3GPP user plane connection 1, then in operations at 110b7 and 110b8, the N2 message is used for triggering establishment of 3GPP user plane connection 1 on an air interface between base station 2 and the UE.

If the PDU session establishment/modification request in the operations at 110b1 is used for modifying 3GPP user plane connection 1, then in the operations at 110b7 and 110b8, the N2 message indicates base station 2 to add, delete, or update the QoS parameter or QoS flow corresponding to 3GPP user plane connection 1.

After operations at 110b8, operations at 110b9 and 110b10 may also be performed. That is, the UE sends to the SMF an indication indicating that establishment or modification of 3GPP user plane connection 1 is completed, and the SMF sends to the AMF the indication indicating that establishment or modification of 3GPP user plane connection 1 is completed.

At 110b11 and 110b12, the AMF sends, via base station 1, to the UE an N2 message (NAS message: PDU session establishment/modification reply) (which may contain the ID of 3GPP user plane connection 1). The N2 message may indicate an establishment result or a modification result, for example, successful establishment or successful modification of 3GPP user plane connection 1.

Finally, it may be noted that in various examples (for example, the above examples in FIGs. 7 to 11) provided in the disclosure, base station 1 is different from base station 2. For example, base station 1 and base station 2 may be different base stations under different RATs and/or different systems, or base station 1 and base station 2 may be different base stations under the same RAT and/or the same system.

By using the above solution, the terminal may receive the information related to at least one of the multiple 3GPP user plane connections supported and/or requested by the terminal for establishment. As such, the problem in the related art that at least one of the multiple 3GPP user plane connections supported by the terminal is unable to be maintained when multiple accesses are all 3GPP accesses can be solved.

Specifically, the terminal may receive the information related to the multiple 3GPP user plane connections supported and/or requested by the terminal for establishment. As such, the terminal can be supported to establish the multiple 3GPP user plane connections, thereby solving the problem in the related art that the multiple 3GPP user plane connections are unable to be established when multiple accesses are all 3GPP accesses. In this way, the terminal can achieve higher capacity and/or throughput without establishment of a non-3GPP connection. In addition, the solution provided in this embodiment provides a scheme where during related procedures such as a registration procedure or a session establishment procedure, the terminal reports a capability and negotiates with the network side to obtain the information related to the multiple 3GPP user plane connections supported and/or requested by the terminal for establishment, thereby solving the problem that the related negotiation between capability reporting and network-side support and authorization regarding the establishment of user plane connections for multiple 3GPP accesses is not supported in the related protocol. Moreover, according to the solution provided in this embodiment, modification or establishment of a user plane connection is requested via a control plane connection, where the control plane connection and the user plane connection correspond to different RATs and/or different system types and/or different network types. As such, the problem that a user plane connection corresponding to another 3GPP access is unable to maintained via a connection corresponding to one 3GPP access in a scenario of multiple 3GPP accesses in the related protocol can be solved.

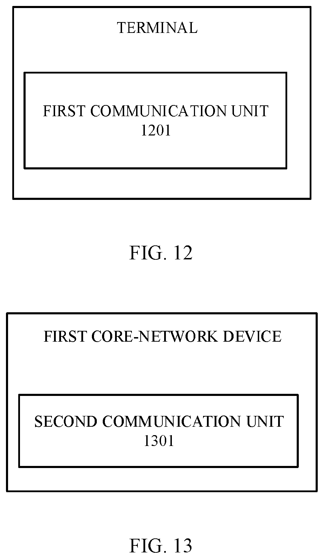

FIG. 12 is a schematic structural diagram of composition of a terminal according to an embodiment of the disclosure. The terminal includes a first communication unit 1201. The first communication unit 1201 is configured to receive a first reply message. The first reply message indicates information related to at least one of multiple 3GPP user plane connections supported and/or requested by the terminal for establishment.

The first communication unit is configured to send a first request message.

The first request message carries a capability indication of the terminal.

The first request message is used for establishing a 3GPP control plane connection.

The first reply message carries at least one of: a first parameter allowed for the terminal to establish the multiple 3GPP user plane connections, or an indication indicating whether the terminal is allowed to establish the multiple 3GPP user plane connections.

The first communication unit is configured to send a second request message. The second request message is used for establishing one or more 3GPP user plane connections.

The first request message is used for establishing a first 3GPP user plane connection.

The first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

The first communication unit is configured to send a second request message. The second request message is used for establishing the one or more 3GPP user plane connections except the first 3GPP user plane connection.

The second request message carries at least one of: a first parameter requested and/or required for each 3GPP user plane connection among the one or more 3GPP user plane connections, an access-related parameter, or a capability indication of the terminal.

The first request message is used for establishing the multiple 3GPP user plane connections.

The first request message carries at least one of: a first parameter requested and/or required for each 3GPP user plane connection among the multiple 3GPP user plane connections or an access-related parameter.

The first reply message carries an ID of each 3GPP user plane connection among the multiple 3GPP user plane connections.

The first communication unit is configured to send the first request message via a first 3GPP control plane connection. The first request message is used for establishing or modifying a second 3GPP user plane connection, and the second 3GPP user plane connection and the first 3GPP control plane connection correspond to different first parameters.

The first request message carries at least one of: a first parameter requested and/or required for the second 3GPP user plane connection, an access-related parameter, or an ID of the second 3GPP user plane connection.

The first communication unit is configured to receive the first reply message via the first 3GPP control plane connection. The first reply message indicates an establishment result or a modification result of the second 3GPP user plane connection, and the second 3GPP user plane connection is one of the multiple 3GPP user plane connections supported by the terminal for establishment.

The capability indication of the terminal indicates at least one of: the terminal supporting or requesting establishment of the multiple 3GPP user plane connections, or the number of the multiple 3GPP user plane connections supported or requested by the terminal for establishment.

The first parameter includes at least one of: one or more RATs; one or more network types; or one or more system types.

The one or more network types include at least one of: a TN or an NTN.

The one or more network types include at least one of: a PLMN or an NPN.

The one or more system types include at least one of: a 5GS or an EPS.

The access-related parameter includes at least one of: an ID of each access-network device among one or more access-network devices, an ID of each cell among one or more cells corresponding to the access-network device, a signal measurement result of the access-network device, a signal measurement result of the cell, or IDs related to one or more TAs.

FIG. 13 is a schematic structural diagram of composition of a first core-network device according to an embodiment of the disclosure. The first core-network device includes a second communication unit 1301. The second communication unit 1301 is configured to send a first reply message. The first reply message indicates information related to at least one of multiple 3GPP user plane connections supported and/or requested by a terminal for establishment.

The second communication unit is configured to receive a first request message.

The first request message carries a capability indication of the terminal.

The first request message is used for establishing a first 3GPP control plane connection.

The first reply message carries at least one of: a first parameter allowed for the terminal to establish the multiple 3GPP user plane connections, or an indication indicating whether the terminal is allowed to establish the multiple 3GPP user plane connections.

The second communication unit is configured to receive a second request message. The second request message is used for establishing one or more 3GPP user plane connections.

The first request message is used for establishing a first 3GPP user plane connection.

The first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

The second communication unit is configured to receive a second request message. The second request message is used for establishing the one or more 3GPP user plane connections except the first 3GPP user plane connection.

The second request message carries at least one of: a first parameter requested and/or required for each 3GPP user plane connection among the one or more 3GPP user plane connections, an access-related parameter, or a capability indication of the terminal.

The first request message is used for establishing the multiple 3GPP user plane connections.

The first request message carries at least one of: a first parameter requested and/or required for each 3GPP user plane connection among the multiple 3GPP user plane connections or an access-related parameter.

The first reply message carries an ID of each 3GPP user plane connection among the multiple3 GPP user plane connections.

The second communication unit is configured to send an air interface connection establishment message to an access-network device corresponding to the 3GPP user plane connection. The air interface connection establishment message is used for establishing the 3GPP user plane connection on an air interface between the access-network device corresponding to the 3GPP user plane connection and the terminal. The access-network device corresponding to the 3GPP user plane connection is determined based on at least one of a first parameter requested and/or required for the 3GPP user plane connection or an access-related parameter. Different 3GPP user plane connections correspond to different access-network devices.

The second communication unit is configured to receive the first request message from the terminal via a first 3GPP control plane connection. The first request message is used for establishing or modifying a second 3GPP user plane connection of the terminal, and the second 3GPP user plane connection and the first 3GPP control plane connection correspond to different first parameters.

The first request message carries at least one of: a first parameter requested and/or required for the second 3GPP user plane connection, an access-related parameter, or an ID of the second 3GPP user plane connection.

The second communication unit is configured to send the first reply message to the terminal via the first 3GPP control plane connection. The first reply message indicates an establishment result or a modification result of the second 3GPP user plane connection, and the second 3GPP user plane connection is one of the multiple 3GPP user plane connections supported by the terminal for establishment.

The second communication unit is configured to send a first message to an access-network device corresponding to the second 3GPP user plane connection. The first message indicates at least one of: establishment of the second 3GPP user plane connection on an air interface between the access-network device corresponding to the second 3GPP user plane connection and the terminal, addition or deletion or update of a QoS parameter corresponding to the second 3GPP user plane connection, or addition or deletion or update of a QoS flow corresponding to the second 3GPP user plane connection.

The capability indication of the terminal indicates at least one of: the terminal supporting or requesting establishment of the multiple 3GPP user plane connections, or the number of the multiple 3GPP user plane connections supported or requested by the terminal for establishment.

The first parameter includes at least one of: one or more RATs; one or more network types; or one or more system types.

The one or more network types include at least one of: a TN or an NTN.

The one or more network types include at least one of: a PLMN or an NPN.

The one or more system types include at least one of: a 5GS or an EPS.

The access-related parameter includes at least one of: an ID of each access-network device among one or more access-network devices, an ID of each cell among one or more cells corresponding to the access-network device, a signal measurement result of the access-network device, a signal measurement result of the cell, or IDs related to one or more TAs.

Devices in embodiments of the disclosure can implement corresponding functions of the devices in the above authentication method embodiments. For procedures, functions, implementations, and beneficial effects corresponding to modules (submodules, units, or components) in the terminal or the first core-network device, reference can be made to corresponding illustrations in the above method embodiments, which will not be repeated herein. It may be noted that functions of modules (submodules, units, components, or the like) in the terminal or the first core-network device in embodiments of the disclosure may be implemented by different modules (submodules, units, components, or the like), or may be implemented by the same module (submodule, unit, component, or the like).

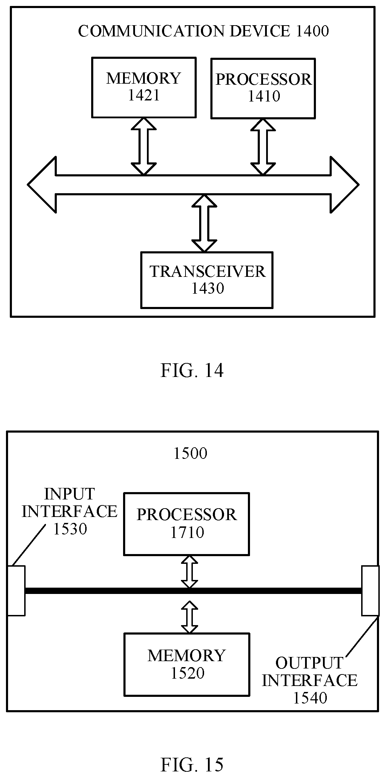

FIG. 14 is a schematic structural diagram of a communication device 1400 according to embodiments of the disclosure. The communication device 1400 includes a processor 1410. The processor 1410 may invoke and execute a computer program stored in a memory, to cause the communication device 1400 to implement the method in embodiments of the disclosure. In a possible implementation, the communication device 1400 may further include a memory 1420. The processor 1410 may invoke and execute a computer program stored in the memory 1420, to cause the communication device 1400 to implement the method in embodiments of the disclosure. The memory 1420 may be a separate device independent of the processor 1410, or may be integrated into the processor 1410. In a possible implementation, the communication device 1400 may further include a transceiver 1430. The processor 1410 may control the transceiver 1430 to communicate with another device, and specifically, may send information or data to another device, or receive information or data from the another device. The transceiver 1430 may include a transmitter and a receiver. The transceiver 1430 may further include an antenna, where one or more antennas may be provided.

In a possible implementation, the communication device 1400 may be the terminal or the first core-network device in embodiments of the disclosure, and the communication device 1400 may implement a corresponding procedure implemented by the terminal or the first core-network device in the methods according to embodiments of the disclosure, which will not be repeated herein for the sake of simplicity.

FIG. 15 is a schematic structural diagram of a chip 1500 according to embodiments of the disclosure. The chip 1500 includes a processor 1510. The processor 1510 may invoke and execute a computer program stored in a memory to implement the method in embodiments of the disclosure. In a possible implementation, the chip 1500 may further include a memory 1520. The processor 1510 may invoke and execute a computer program stored in the memory 1520, to implement the method performed by the terminal or the first core-network device in embodiments of the disclosure. The memory 1520 may be a separate device independent of the processor 1510, or may be integrated into the processor 1510. In a possible implementation, the chip 1500 may further include an input interface 1530. The processor 1510 may control the input interface 1530 to communicate with another device or chip, and specifically, may obtain information or data sent by the another device or chip. In a possible implementation, the chip 1500 may further include an output interface 1540. The processor 1510 may control the output interface 1540 to communicate with another device or chip, and specifically, may output information or data to the another device or chip.

In a possible implementation, the chip may be applied to the terminal or the first core-network device in embodiments of the disclosure, and the chip may implement corresponding procedures implemented by the terminal or the first core-network device in the methods according to embodiments of the disclosure, which will not be repeated herein for the sake of simplicity. It may be understood that, the chip mentioned in embodiments of the disclosure may also be a system-on-chip (SoC). The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like. The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM). It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

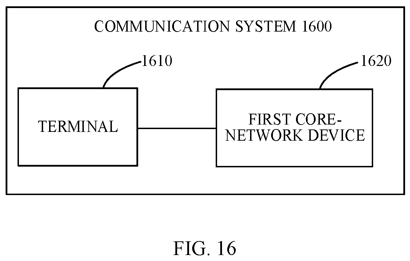

FIG. 16 is a schematic block diagram of a communication system 1600 according to embodiments of the disclosure. The communication system 1600 includes a terminal 1610 and a first core-network device 1620. The terminal 1610 may be configured to implement corresponding functions implemented by the terminal in the above methods. The first core-network device 1620 may be configured to implement corresponding functions implemented by the first core-network device in the above methods, which will not be repeated herein for the sake of simplicity.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure. It will be evident to those skilled in the art that, for the sake of convenience and simplicity, in terms of the specific working processes of the foregoing systems, apparatuses, and units, reference can be made to the corresponding processes in the above method embodiments, which will not be repeated herein. The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a terminal, a first reply message, wherein the first reply message indicates information related to at least one of a plurality of 3rd generation partnership project (3GPP) user plane connections supported and/or requested by the terminal for establishment.

2. The method of claim 1, wherein before receiving, by the terminal, the first reply message, the method further comprises:
sending, by the terminal, a first request message.

3. The method of claim 2, wherein the first request message carries a capability indication of the terminal.

4. The method of claim 2 or 3, wherein the first request message is used for establishing a 3GPP control plane connection.

5. The method of claim 1 or 4, wherein the first reply message carries at least one of: a first parameter allowed for the terminal to establish the plurality of 3GPP user plane connections, or an indication indicating whether the terminal is allowed to establish the plurality of 3GPP user plane connections.

6. The method of claim 5, wherein after receiving, by the terminal, the first reply message, the method further comprises:
sending, by the terminal, a second request message, wherein the second request message is used for establishing one or more 3GPP user plane connections.

7. The method of claim 2 or 3, wherein the first request message is used for establishing a first 3GPP user plane connection.

8. The method of claim 1 or 7, wherein the first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

9. The method of claim 8, wherein after receiving, by the terminal, the first reply message, the method further comprises:
sending, by the terminal, a second request message, wherein the second request message is used for establishing the one or more 3GPP user plane connections except the first 3GPP user plane connection.

10. The method of claim 6 or 9, wherein the second request message carries at least one of: a first parameter requested and/or required for each 3GPP user plane connection among the one or more 3GPP user plane connections, an access-related parameter, or a capability indication of the terminal.

11. The method of claim 2 or 3, wherein the first request message is used for establishing the plurality of 3GPP user plane connections.

12. The method of claim 11, wherein the first request message carries at least one of: a first parameter requested and/or required for each 3GPP user plane connection among the plurality of 3GPP user plane connections or an access-related parameter.

13. The method of claim 11 or 12, wherein the first reply message carries an identifier (ID) of each 3GPP user plane connection among the plurality of 3GPP user plane connections.

14. The method of claim 2 or 3, wherein sending, by the terminal, the first request message comprises:
sending, by the terminal, the first request message via a first 3GPP control plane connection, wherein the first request message is used for establishing or modifying a second 3GPP user plane connection, and the second 3GPP user plane connection and the first 3GPP control plane connection correspond to different first parameters.

15. The method of claim 14, wherein the first request message carries at least one of: a first parameter requested and/or required for the second 3GPP user plane connection, an access-related parameter, or an ID of the second 3GPP user plane connection.

16. The method of claim 14 or 15, wherein receiving, by the terminal, the first reply message comprises:
receiving, by the terminal, the first reply message via the first 3GPP control plane connection, wherein the first reply message indicates an establishment result or a modification result of the second 3GPP user plane connection, and the second 3GPP user plane connection is one of the plurality of 3GPP user plane connections supported by the terminal for establishment.

17. The method of any one of claims 3, 10, and 15, wherein the capability indication of the terminal indicates at least one of: the terminal supporting or requesting establishment of the plurality of 3GPP user plane connections, or a number of the plurality of 3GPP user plane connections supported or requested by the terminal for establishment.

18. The method of any one of claims 5, 8 to 10, 12, and 14 to 16, wherein the first parameter comprises at least one of:
one or more radio access technologies (RATs);
one or more network types; or
one or more system types.

19. The method of claim 18, wherein the one or more network types comprise at least one of: a terrestrial network (TN) or a non-terrestrial network (NTN).

20. The method of claim 18 or 19, wherein the one or more network types comprise at least one of: a public land mobile network (PLMN) or a non-public network (NPN).

21. The method of claim 18, wherein the one or more system types comprise at least one of: a 5th-generation system (5GS) or an evolved packet system (EPS).

22. The method of any one of claims 10, 12, and 15, wherein the access-related parameter comprises at least one of: an ID of each access-network device among one or more access-network devices, an ID of each cell among one or more cells corresponding to the access-network device, a signal measurement result of the access-network device, a signal measurement result of the cell, or IDs related to one or more tracking areas (TAs).

23. A communication method, comprising:
sending, by a first core-network device, a first reply message, wherein the first reply message indicates information related to at least one of a plurality of 3rd generation partnership project (3GPP) user plane connections supported and/or requested by a terminal for establishment.

24. The method of claim 23, wherein before sending, by the first core-network device, the first reply message, the method further comprises:
receiving, by the first core-network device, a first request message.

25. The method of claim 24, wherein the first request message carries a capability indication of the terminal.

26. The method of claim 24 or 25, wherein the first request message is used for establishing a first 3GPP control plane connection.

27. The method of claim 23 or 26, wherein the first reply message carries at least one of: a first parameter allowed for the terminal to establish the plurality of 3GPP user plane connections, or an indication indicating whether the terminal is allowed to establish the plurality of 3GPP user plane connections.

28. The method of claim 27, wherein after sending, by the first core-network device, the first reply message, the method further comprises:
receiving, by the first core-network device, a second request message, wherein the second request message is used for establishing one or more 3GPP user plane connections.

29. The method of claim 24 or 25, wherein the first request message is used for establishing a first 3GPP user plane connection.

30. The method of claim 23 or 29, wherein the first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

31. The method of claim 30, wherein after sending, by the first core-network device, the first reply message, the method further comprises:
receiving, by the first core-network device, a second request message, wherein the second request message is used for establishing the one or more 3GPP user plane connections except the first 3GPP user plane connection.

32. The method of claim 28 or 31, wherein the second request message carries at least one of: a first parameter requested and/or required for each 3GPP user plane connection among the one or more 3GPP user plane connections, an access-related parameter, or a capability indication of the terminal.

33. The method of claim 24 or 25, wherein the first request message is used for establishing the plurality of 3GPP user plane connections.

34. The method of claim 33, wherein the first request message carries at least one of: a first parameter requested and/or required for each 3GPP user plane connection among the plurality of 3GPP user plane connections or an access-related parameter.

35. The method of claim 33 or 34, wherein the first reply message carries an identifier (ID) of each 3GPP user plane connection among the plurality of 3GPP user plane connections.

36. The method of any one of claims 28, 31, 34, and 35, further comprising:
sending, by the first core-network device, an air interface connection establishment message to an access-network device corresponding to the 3GPP user plane connection, wherein the air interface connection establishment message is used for establishing the 3GPP user plane connection on an air interface between the access-network device corresponding to the 3GPP user plane connection and the terminal, the access-network device corresponding to the 3GPP user plane connection is determined based on at least one of a first parameter requested and/or required for the 3GPP user plane connection or an access-related parameter, and different 3GPP user plane connections correspond to different access-network devices.

37. The method of claim 24 or 25, wherein receiving, by the first core-network device, the first request message comprises:
receiving, by the first core-network device, the first request message from the terminal via a first 3GPP control plane connection, wherein the first request message is used for establishing or modifying a second 3GPP user plane connection of the terminal, and the second 3GPP user plane connection and the first 3GPP control plane connection correspond to different first parameters.

38. The method of claim 37, wherein the first request message carries at least one of: a first parameter requested and/or required for the second 3GPP user plane connection, an access-related parameter, or an ID of the second 3GPP user plane connection.

39. The method of claim 37 or 38, wherein sending, by the first core-network device, the first reply message comprises:
sending, by the first core-network device, the first reply message to the terminal via the first 3GPP control plane connection, wherein the first reply message indicates an establishment result or a modification result of the second 3GPP user plane connection, and the second 3GPP user plane connection is one of the plurality of 3GPP user plane connections supported by the terminal for establishment.

40. The method of any one of claims 37 to 39, wherein after receiving, by the first core-network device, the first request message from the terminal via the first 3GPP control plane connection, the method further comprises:
sending, by the first core-network device, a first message to an access-network device corresponding to the second 3GPP user plane connection, wherein the first message indicates at least one of: establishment of the second 3GPP user plane connection on an air interface between the access-network device corresponding to the second 3GPP user plane connection and the terminal, addition or deletion or update of a quality of service (QoS) parameter corresponding to the second 3GPP user plane connection, or addition or deletion or update of a QoS flow corresponding to the second 3GPP user plane connection.

41. The method of claim 25 or 32, wherein the capability indication of the terminal indicates at least one of: the terminal supporting or requesting establishment of the plurality of 3GPP user plane connections, or a number of the plurality of 3GPP user plane connections supported or requested by the terminal for establishment.

42. The method of any one of claims 27, 28, 30 to 32, 34, and 36 to 40, wherein the first parameter comprises at least one of:
one or more radio access technologies (RATs);
one or more network types; or
one or more system types.

43. The method of claim 42, wherein the one or more network types comprise at least one of: a terrestrial network (TN) or a non-terrestrial network (NTN).

44. The method of claim 42 or 43, wherein the one or more network types comprise at least one of: a public land mobile network (PLMN) or a non-public network (NPN).

45. The method of claim 42, wherein the one or more system types comprise at least one of: a 5th-generation system (5GS) or an evolved packet system (EPS).

46. The method of any one of claims 32, 34, 36, and 38, wherein the access-related parameter comprises at least one of: an ID of each access-network device among one or more access-network devices, an ID of each cell among one or more cells corresponding to the access-network device, a signal measurement result of the access-network device, a signal measurement result of the cell, or IDs related to one or more tracking areas (TAs).

47. A terminal, comprising:
a first communication unit configured to receive a first reply message, wherein the first reply message indicates information related to at least one of a plurality of 3rd generation partnership project (3GPP) user plane connections supported and/or requested by the terminal for establishment.

48. The terminal of claim 47, wherein the first communication unit is configured to send a first request message.

49. The terminal of claim 48, wherein the first request message carries a capability indication of the terminal.

50. The terminal of claim 48 or 49, wherein the first request message is used for establishing a 3GPP control plane connection.

51. The terminal of claim 47 or 50, wherein the first reply message carries at least one of: a first parameter allowed for the terminal to establish the plurality of 3GPP user plane connections, or an indication indicating whether the terminal is allowed to establish the plurality of 3GPP user plane connections.

52. The terminal of claim 51, wherein the first communication unit is configured to send a second request message, wherein the second request message is used for establishing one or more 3GPP user plane connections.

53. The terminal of claim 48 or 49, wherein the first request message is used for establishing a first 3GPP user plane connection.

54. The terminal of claim 47 or 53, wherein the first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

55. The terminal of claim 54, wherein the first communication unit is configured to send a second request message, wherein the second request message is used for establishing the one or more 3GPP user plane connections except the first 3GPP user plane connection.

56. The terminal of claim 52 or 55, wherein the second request message carries at least one of: a first parameter requested and/or required for each 3GPP user plane connection among the one or more 3GPP user plane connections, an access-related parameter, or a capability indication of the terminal.

57. The terminal of claim 48 or 49, wherein the first request message is used for establishing the plurality of 3GPP user plane connections.

58. The terminal of claim 57, wherein the first request message carries at least one of: a first parameter requested and/or required for each 3GPP user plane connection among the plurality of 3GPP user plane connections or an access-related parameter.

59. The terminal of claim 57 or 58, wherein the first reply message carries an identifier (ID) of each 3GPP user plane connection among the plurality of 3GPP user plane connections.

60. The terminal of claim 48 or 49, wherein the first communication unit is configured to send the first request message via a first 3GPP control plane connection, wherein the first request message is used for establishing or modifying a second 3GPP user plane connection, and the second 3GPP user plane connection and the first 3GPP control plane connection correspond to different first parameters.

61. The terminal of claim 60, wherein the first request message carries at least one of: a first parameter requested and/or required for the second 3GPP user plane connection, an access-related parameter, or an ID of the second 3GPP user plane connection.

62. The terminal of claim 60 or 61, wherein the first communication unit is configured to receive the first reply message via the first 3GPP control plane connection, wherein the first reply message indicates an establishment result or a modification result of the second 3GPP user plane connection, and the second 3GPP user plane connection is one of the plurality of 3GPP user plane connections supported by the terminal for establishment.

63. The terminal of any one of claims 49, 56, and 61, wherein the capability indication of the terminal indicates at least one of: the terminal supporting or requesting establishment of the plurality of 3GPP user plane connections, or a number of the plurality of 3GPP user plane connections supported or requested by the terminal for establishment.

64. The terminal of any one of claims 51, 54 to 56, 58, and 60 to 62, wherein the first parameter comprises at least one of:
one or more radio access technologies (RATs);
one or more network types; or
one or more system types.

65. The terminal of claim 64, wherein the one or more network types comprise at least one of: a terrestrial network (TN) or a non-terrestrial network (NTN).

66. The terminal of claim 64 or 65, wherein the one or more network types comprise at least one of: a public land mobile network (PLMN) or a non-public network (NPN).

67. The terminal of claim 64, wherein the one or more system types comprise at least one of: a 5th-generation system (5GS) or an evolved packet system (EPS).

68. The terminal of any one of claims 56, 58, and 61, wherein the access-related parameter comprises at least one of: an ID of each access-network device among one or more access-network devices, an ID of each cell among one or more cells corresponding to the access-network device, a signal measurement result of the access-network device, a signal measurement result of the cell, or IDs related to one or more tracking areas (TAs).

69. A first core-network device, comprising:
a second communication unit configured to send a first reply message, wherein the first reply message indicates information related to at least one of a plurality of 3rd generation partnership project (3GPP) user plane connections supported and/or requested by a terminal for establishment.

70. The first core-network device of claim 69, wherein the second communication unit is configured to receive a first request message.

71. The first core-network device of claim 70, wherein the first request message carries a capability indication of the terminal.

72. The first core-network device of claim 70 or 71, wherein the first request message is used for establishing a first 3GPP control plane connection.

73. The first core-network device of claim 69 or 72, wherein the first reply message carries at least one of: a first parameter allowed for the terminal to establish the plurality of 3GPP user plane connections, or an indication indicating whether the terminal is allowed to establish the plurality of 3GPP user plane connections.

74. The first core-network device of claim 73, wherein the second communication unit is configured to receive a second request message, wherein the second request message is used for establishing one or more 3GPP user plane connections.

75. The first core-network device of claim 70 or 71, wherein the first request message is used for establishing a first 3GPP user plane connection.

76. The first core-network device of claim 69 or 75, wherein the first reply message carries at least one of: a first parameter allowed for the terminal to establish one or more 3GPP user plane connections except a first 3GPP user plane connection, or an indication indicating whether the terminal is allowed to establish the one or more 3GPP user plane connections except the first 3GPP user plane connection.

77. The first core-network device of claim 76, wherein the second communication unit is configured to receive a second request message, wherein the second request message is used for establishing the one or more 3GPP user plane connections except the first 3GPP user plane connection.

78. The first core-network device of claim 74 or 77, wherein the second request message carries at least one of: a first parameter requested and/or required for each 3GPP user plane connection among the one or more 3GPP user plane connections, an access-related parameter, or a capability indication of the terminal.

79. The first core-network device of claim 70 or 71, wherein the first request message is used for establishing the plurality of 3GPP user plane connections.

80. The first core-network device of claim 79, wherein the first request message carries at least one of: a first parameter requested and/or required for each 3GPP user plane connection among the plurality of 3GPP user plane connections or an access-related parameter.

81. The first core-network device of claim 79 or 80, wherein the first reply message carries an identifier (ID) of each 3GPP user plane connection among the plurality of 3GPP user plane connections.

82. The first core-network device of any one of claims 74, 77, 80, and 81, wherein the second communication unit is configured to send an air interface connection establishment message to an access-network device corresponding to the 3GPP user plane connection, wherein the air interface connection establishment message is used for establishing the 3GPP user plane connection on an air interface between the access-network device corresponding to the 3GPP user plane connection and the terminal, the access-network device corresponding to the 3GPP user plane connection is determined based on at least one of a first parameter requested and/or required for the 3GPP user plane connection or an access-related parameter, and different 3GPP user plane connections correspond to different access-network devices.

83. The first core-network device of claim 70 or 71, wherein the second communication unit is configured to receive the first request message from the terminal via a first 3GPP control plane connection, wherein the first request message is used for establishing or modifying a second 3GPP user plane connection of the terminal, and the second 3GPP user plane connection and the first 3GPP control plane connection correspond to different first parameters.

84. The first core-network device of claim 83, wherein the first request message carries at least one of: a first parameter requested and/or required for the second 3GPP user plane connection, an access-related parameter, or an ID of the second 3GPP user plane connection.

85. The first core-network device of claim 83 or 84, wherein the second communication unit is configured to send the first reply message to the terminal via the first 3GPP control plane connection, wherein the first reply message indicates an establishment result or a modification result of the second 3GPP user plane connection, and the second 3GPP user plane connection is one of the plurality of 3GPP user plane connections supported by the terminal for establishment.

86. The first core-network device of any one of claims 83 to 85, wherein the second communication unit is configured to send a first message to an access-network device corresponding to the second 3GPP user plane connection, wherein the first message indicates at least one of: establishment of the second 3GPP user plane connection on an air interface between the access-network device corresponding to the second 3GPP user plane connection and the terminal, addition or deletion or update of a quality of service (QoS) parameter corresponding to the second 3GPP user plane connection, or addition or deletion or update of a QoS flow corresponding to the second 3GPP user plane connection.

87. The first core-network device of claim 71 or 78, wherein the capability indication of the terminal indicates at least one of: the terminal supporting or requesting establishment of the plurality of 3GPP user plane connections, or a number of the plurality of 3GPP user plane connections supported or requested by the terminal for establishment.

88. The first core-network device of any one of claims 73, 74, 76 to 78, 80, and 82 to 86, wherein the first parameter comprises at least one of:
one or more radio access technologies (RATs);
one or more network types; or
one or more system types.

89. The first core-network device of claim 88, wherein the one or more network types comprise at least one of: a terrestrial network (TN) or a non-terrestrial network (NTN).

90. The first core-network device of claim 88 or 89, wherein the one or more network types comprise at least one of: a public land mobile network (PLMN) or a non-public network (NPN).

91. The first core-network device of claim 88, wherein the one or more system types comprise at least one of: a 5th-generation system (5GS) or an evolved packet system (EPS).

92. The first core-network device of any one of claims 78, 80, 82, and 84, wherein the access-related parameter comprises at least one of: an ID of each access-network device among one or more access-network devices, an ID of each cell among one or more cells corresponding to the access-network device, a signal measurement result of the access-network device, a signal measurement result of the cell, or IDs related to one or more tracking areas (TAs).

93. A terminal, comprising a transceiver, a processor, and a memory, wherein the memory is configured to store a computer program, the transceiver is configured to communicate with other devices, and the processor is configured to invoke and execute the computer program stored in the memory, to cause the terminal to perform the method of any one of claims 1 to 22.

94. A first core-network device, comprising a transceiver, a processor, and a memory, wherein the memory is configured to store a computer program, the transceiver is configured to communicate with other devices, and the processor is configured to invoke and execute the computer program stored in the memory, to cause the first core-network device to perform the method of any one of claims 23 to 46.

95. A chip, comprising a processor, wherein the processor is configured to invoke and execute a computer program stored in a memory, to cause a device equipped with the chip to perform the method of any one of claims 1 to 22 or the method of any one of claims 23 to 46.

96. A computer-readable storage medium configured to store a computer program which, when executed by a device, causes the device to perform the method of any one of claims 1 to 22 or the method of any one of claims 23 to 46.

97. A computer program product comprising computer program instructions which cause a computer to perform the method of any one of claims 1 to 22 or the method of any one of claims 23 to 46.

98. A computer program causing a computer to perform the method of any one of claims 1 to 22 or the method of any one of claims 23 to 46.
